(19) Europäisches Patentamt
European Patent Office
Office européen des brevets

(11) EP 2 652 031 B1

(12) EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **11805468.3**

(22) Anmeldetag: **15.12.2011**

(51) Int Cl.:
***C08K 5/00*** (2006.01) ***C08L 69/00*** (2006.01)

(86) Internationale Anmeldenummer:
**PCT/EP2011/072913**

(87) Internationale Veröffentlichungsnummer:
**WO 2012/080396 (21.06.2012 Gazette 2012/25)**

# (54) FARBSTABILE LED-SUBSTRATE

COLOUR-STABLE LED SUBSTRATES

SUBSTRATS DE DEL DE COULEUR STABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 IT RM20100668**

(43) Veröffentlichungstag der Anmeldung:
**23.10.2013 Patentblatt 2013/43**

(73) Patentinhaber: **Covestro Deutschland AG**
**51373 Leverkusen (DE)**

(72) Erfinder:
- **DERN, Gesa**
  **40627 Düsseldorf (DE)**
- **MEYER, Alexander**
  **40489 Düsseldorf (DE)**
- **REICHENAUER, Joerg**
  **47802 Krefeld (DE)**

(74) Vertreter: **Levpat**
**c/o Covestro AG**
**Gebäude 4825**
**51365 Leverkusen (DE)**

(56) Entgegenhaltungen:

| | |
|---|---|
| **EP-A1- 0 639 624** | **EP-A1- 1 865 027** |
| **DE-A1- 1 569 613** | **DE-A1- 2 148 101** |
| **DE-A1- 19 636 032** | **DE-C- 955 268** |
| **US-A- 2 889 327** | **US-A- 3 728 124** |
| **US-A1- 2009 062 424** | **US-B1- 6 476 158** |

- **DATABASE WPI Week 199301 Thomson Scientific, London, GB; AN 1993-002849 XP002668050, -& JP 4 328154 A (DAINIPPON INK & CHEM KK) 17. November 1992 (1992-11-17)**

EP 2 652 031 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung von einer Farbmittelmischung enthaltend mindestens ein Farbmittel der Struktur 1a) und/oder 1b) sowie mindestens ein weiteres Farbmittel ausgewählt aus der Gruppe, welche die von Struktur 1a) bzw. 1b) verschiedenen Farbmittel auf Perinonbasis und Farbmittel auf Basis eines Phthalocyanins, Phthalocyaninkomplexes oder Indanthrens umfaßt, in Polymerzusammensetzungen zur Herstellung von eingefärbten geformten Gegenständen mit hoher Farbstabilität gegenüber der Einwirkung von LED-Licht.

Die Erfindung betrifft insbesondere transparente oder transluzente thermoplastische Formmassen enthaltend eine solche Farbmittelmischung für die Herstellung von optischen Bauteilen, wie beispielsweise Linsen oder Lichtleiter, die eine erhöhte Farbstabilität bei Belichtung mit LED-Licht aufweisen, sowie deren Herstellung und Verwendung.

Ferner betrifft die Erfindung bevorzugt transparente oder transluzente Formmassen, enthaltend eine solche Farbmittelmischung für die Herstellung von optischen Bauteilen, wie beispielsweise Linsen oder Lichtleiter, wobei diese Formmassen bei Einstellung eines speziellen Farbortes durch Farbkorrektur mittels der erfindungsgemäßen Farbmitteln eine erhöhte Transmission für LED-Licht als mit anderen Farbmitteln korrigierte Formmassen aufweisen.

Im Sinne der Erfindung sind transparente Formmassen solche, die eine Transmission (gemessen bei einer Dicke von 4 mm gemäß ISO 13468-2) von mindestens 80 % und eine Trübung von weniger als 5,0 %, bevorzugt 4,0 %, weiter bevorzugt weniger als 3,0 %, insbesondere bevorzugt weniger als 2,0 %
aufweisen. Als transluzent im Sinne der vorliegenden Erfindung werden Formmassen bezeichnet, die eine Transmission (gemessen bei einer Dicke von 4 mm gemäß ISO 13468-2) von weniger als 80 % und größer als 20 %, weiter bevorzugt von weniger als 80 % und größer als 50 %, und/oder eine Trübung von größer als 5,0 % und maximal 80,0 % aufweisen.

Als "LED-Licht" wird im Sinne der vorliegenden Erfindung Licht verstanden, das eine Strahlungcharakteristik aufweist, bei der mehr als 70% der im Bereich von 100 nm bis 3000 nm abgegebenen Intensität im sichtbaren Bereich (im Sinne der vorliegenden Erfindung ist der sichtbare Bereich definiert als der Wellenlängenbereich von 360 nm bis 780 nm) liegt. Insbesondere liegen weniger als 5% der Intensität im Bereich <360 nm. Bei Betrachtung des Bereichs zwischen 360 nm und 500 nm weist das LED-Licht im Rahmen der vorliegenden Erfindung vorzugsweise eine dominante Wellenlänge (lokales Maximum) zwischen zwischen 360 nm und 480 nm auf, weiter bevorzugt zwischen 400 nm bis 480 nm, und besonders bevorzugt zwischen 430 nm und 470 nm auf (Grenzwerte jeweils eingeschlossen).

Diese dominante Wellenlänge muss, insbesondere bei LED-Modulen, die Licht mit weißem Farbeindruck emittieren, nicht über das gesamte sichtbare Spektrum die dominante Emission (=höchste Intensität) bedeuten.

Im Rahmen der vorliegenden Erfindung weist "LED-Licht" ein lokales Maximum im Bereich zwischen 360 nm und 480 nm) auf, das eine enge Emissionsbreite mit einer Halbwertsbreite von maximal 60 nm, weiter bevorzugt von maximal 45 nm, noch weiter bevorzugt von max. 30 nm hat, wobei monochromatisches Licht besonders bevorzugt ist.

In einer alternativen Ausführungsform weist das LED-Licht ein lokales Maximum (im Bereich zwischen 360 nm und 500 nm) von 400 nm bis 405 nm einschließlich auf. Solche Emissionscharakteristika werden unter anderem durch die Verwendung von Halbleitern oder Lasern als Lichtquelle erreicht. Die Halbleitertechnologie wird heute bereits häufig eingesetzt, beispielsweise in LEDs (light emitting diodes), organischen LEDs (OLEDs) und elektrolumineszierenden Folien.

Im Gegensatz zu herkömmlichen Leuchtmitteln wie Glühbirnen oder Leuchtstoffröhren weisen LEDs eine von diesen verschiedene Abstrahlcharakteristik auf. Für Anwendungen, die eine Lenkung des Lichtstrahls erfordern, müssen oft Linsen oder Lichtleiter eingesetzt werden. Alternativ oder ergänzend hierzu enthalten Leuchtkörper mit LEDs als Lichtquelle in der Regel einen transparente oder transluzenten Gehäuseteil, der zur Abdeckung der Lichtquelle dient, die Lichtquelle schützt und gegen äußeren Einflusse wie Dreck und Staub abschirmt.

Aufgrund ihrer hohen Lebensdauer, ihres geringen Energieverbrauchs und der guten Lichtausbeute finden LEDs als Beleuchtungsquellen vermehrt Anwendung, z.B. in der Automobilindustrie, Luftfahrt, Innenraumbeleuchtung, Fassadengestaltung, etc.

Glühbirnen sind aufgrund ihres schlechten Wirkungsgrades hinsichtlich Lichtemission und hoher Wärmeentwicklung sowie der geringen Lebensdauer von Nachteil. Energiesparlampen sind deutlich energieeffizienter, jedoch stellen sie aufgrund von Schwermetallanteilen, insbesondere Quecksilber, eine hohe Umweltbelastung dar und müssen als Sondermüll entsorgt werden. Alternative Konzepte zu herkömmlichen Beleuchtungsquellen und -modulen, wie z.B. Glühbirnen oder Energiesparlampen, sind im Hinblick auf Nachhaltigkeit und Energieeffizienz gefragt.

Eine alternative Beleuchtungsquelle, die diese Nachteile nicht aufweist und zudem eine hohe Lebensdauer und hohe Energieeffizienz aufweist, bietet die Halbleiter-Technologie (als LED, OLED oder elektrolumineszierende Folie). Eine bevorzugte Verwendung der Halbleitertechnologie als Lichtquelle sind die LEDs.

LEDs strahlen Licht mit einer vom Halbleitermaterial und der Dotierung abhängigen Wellenlänge ab, so daß mit LEDs annähernd monochromatisches Licht, auch im Infrarotbereich oder UV-Bereich, erzeugt werden kann.

Zur Erzeugung von sichtbarem, weißem Licht, das bekanntlich eine Mischung unterschiedlicher Wellenlängen ist, muß daher das monochromatische Licht der LEDs "umgewandelt" werden (z.B. durch additve Farbmischung), was prinzipiell mit verschiedenen Mitteln möglich ist:

1. Farbmischung durch Kombination einer blauen, einer roten und einer grün abstrahlenden LED zu sogenannten RGB (Rot Grün Blau)-Modulen, deren kombinierter wahrgenommener Lichteindruck weiß ist.

2. Durch Lumineszenztechniken, bei denen die gesamte oder ein Teil der LED-Strahlung beispielsweise über Phosphore zu anderen Wellenlängen umgewandelt werden.

So kann weißes Licht, ausgehend von einer im sichtbaren Bereich blau leuchtenden LED, durch Zusatz eines einzigen Phosphoren, der einen Teil der Strahlung im blauen Bereich in rot/gelbes Licht umwandelt, erzeugt werden. Diese Form der Erzeugung weißen Lichts ist für kommerzielle Anwendungen aus Kostengründen und aufgrund des hohen Wirkungsgrades von blauen LEDs bevorzugt.

Alternativ kann aus mit LEDs erzeugtem UV-Licht mit Hilfe dreier unterschiedlichen Phosphore, die Wellenlängen entsprechend einem RGB-Modul emittieren, weißes Licht erzeugt werden. Sofern diese Technik angewandt wird, werden Zusammensetzungen bevorzugt, die auch eine erhöhte Stabilität gegenüber UV-Strahlung aufweisen, also beispielsweise mit einer UV-Stabilisierung versehen sind.

Zur Einstellung eines von "weiß" abweichenden Gesamtfarbeindrucks in LED-Modulen können die obigen Lichtquellen nach Bedarf noch weiter modifiziert werden. Diese Modifizierung kann beispielsweise erfolgen durch:

- Kombination mit einem Phosphoreszenzfarbstoff oder

- Kombination mit zusätzlichen Lichtquellen mit einer anderen Emissionscharakteristik.

Bei der Verwendung transparenter oder transluzenter Kunststoffe für Linsen, Lichtleiter, Abdeckungen oder andere Bauteile einer Beleuchtungseinrichtung steht die Stabilität gegenüber dem Licht der verwendeten Lichtquelle im Fokus. Dieses liegt bevorzugt in dem Bereich, der für das menschliche Auge sichtbar ist, da diese Beleuchtungseinrichtungen für den Gebrauch durch Menschen konzipiert sind. Emission außerhalb des sichtbaren Bereiches bedeuten einen Verlust an Energie und somit eine herabgesetzte Effizienz der Lichtquelle. Es besteht also Bedarf an einer transparenten oder transluzenten Kunststoffzusammensetzung, die eine hohe Farbstabilität gegenüber dem Emissionsspektrum einer solchen Lichtquelle besitzt. Außerdem erfordert die Herstellung solcher Bauteile im Falle einer thermoplastischen Kunststoffzusammensetzung eine gute Fließfähigkeit, um komplexe Geometrien einfach fertigen zu können. Solche Bauteile sollen über integrierte Elemente wie beispielsweise Steck- oder Schraubverbindungen mit den weiteren Elementen der Beleuchtungseinrichtung verbunden werden können und benötigen daher eine gute mechanische Beständigkeit. Ferner wird eine erhöhte Wärmeformbeständigkeit benötigt, um die Gebrauchstemperaturen der Beleuchtungseinrichtung ohne Veränderungen der optischen, geometrischen oder anderen Eigenschaften dauerhaft zu bestehen.

Linsen, Lichtleiter, transparente oder transluzente Abdeckungen und andere transparente oder transluzente Bauteile in Leuchtkörpern können aus transparenten oder transluzenten Polymeren hergestellt werden. Hierzu eignen sich besonders spritzgußfähige transparente oder transluzente Thermoplasten und Thermoplastzusammensetzungen ausgewählt aus der Gruppe, die Polycarbonat (PC), Copolycarbonat, Polyestercarbonat, Polystyrol (PS), Styrol-Copolymere, Polyalkylene wie Polyethylen (PE) und Polypropylen (PP), aromatische Polyester wie Polyethylenterephthalat (PET) und Polybutylenterephthalat (PBT), PET-Cyclohexandimethanol-Copolymer (PETG), Polyethylennaphthalat (PEN), Poly- oder Copolymethylmethacrylate wie Polymethylmethacrylat (PMMA), Polyimide (z.B. PMMI), Polyethersulfone, thermoplastische Polyurethane, cyclische Olefinpolymere oder -copolymere (COP bzw. COC), oder Mischungen der genannten Komponenten umfasst, sofern diese Mischungen transparent oder transluzent sind.

Häufig werden solche transparenten oder transluzenten Materialien mit zusätzlichen Farbmitteln versetzt, um den Farbeindruck oder die Farbtemperatur des Lichts zu verändern.

Stabile Farbmittel an sich sind bekannt und in der Literatur beschrieben. So beschreibt die US 6,476,158 gedeckte, d.h. nicht transparente oder transluzente, Polycarbonat-basierte Zusammensetzungen (Polycarbonat-Polyester-Blends), welche eine besonders hohe Stabilität gegenüber künstlicher Bewitterung aufweisen. In dieser Anmeldung werden zudem Farbmittel genannt, die eine hohe Witterungsstabilität aufweisen bzw. zu einer Beibehaltung des Glanzgrades nach Bewitterung beitragen.

US 6,355,723 offenbart ähnliche Farbmittel wie die US 6,476,158, die aufgrund ihrer Thermostabilität zur Einarbeitung in Polycarbonat grundsätzlich geeignet sind. Angaben zur Stabilität gegen Strahlung jeglicher Art und insbesondere im sichtbaren Bereich werden jedoch nicht gemacht.

Bei der Herstellung und bei der Verwendung von optischen Bauteilen, wie Linsen, Lichtleiter und Abdeckungen, aus im Stand der Technik bekannten Zusammensetzungen zeigte sich jedoch, dass diese durch LED-Licht verändert werden. Insbesondere werden die optischen Eigenschaften, z.B. YI (Yellowness-Index), in nicht akzeptablem Rahmen beeinflusst.

Dies ist insbesondere unerwartet, da das LED-Licht keinen signifikanten Anteil an UV-Strahlung (< 360 nm)

enthält, der neben thermischen Einflüssen im Wesentlichen für die Verfärbung von transparenten oder transluzenten Thermoplasten verantwortlich ist.

Überraschenderweise wurde ferner gefunden, dass die in US 6,476,158 in Polycarbonat als lichtecht und farbstabil geltenden Farbmittel auf Anthrachinonbasis bezüglich Lichtes im sichtbaren Bereich, insbesondere bei LED-Licht, eine ungenügende Stabilität aufweisen. Der Fachmann auf dem Gebiet würde davon ausgehen, dass Farbmittel, die insbesondere auch gegen Sonnenlicht, das einen energiereichen und potentiell stark schädigenden UV-Anteil (<360 nm) enthält, stabil sind, sich eigentlich auch für derartige Anwendungen mit LED-Licht Beanspruchung eignen sollten.

Somit stellt sich das für den Fachmann unerwartete Problem, daß auch andere Farbstoffklassen bzw. Substanzen, wie Methin-Farbstoffe oder Phthalocyanine, denen zwar allgemein eine hohe Lichtechtheit und Farbstabilität gegenüber Witterungseinflüssen zugemessen wird, nicht zwangsläufig für Anwendungen mit LED-Licht-Beanspruchung geeignet sind.

Darüber hinaus ist es oft erforderlich, für die Einstellung eines bestimmten Farbeindrucks mehrere Farbmittel zu kombinieren.

Somit ist für den Fachmann aus dem bestehenden Stand der Technik nicht naheliegend, welche Farbmittel gegen LED-Strahlung stabil sind. Aus dem Stand der Technik sind daher keine Farbmittel oder Farbmittelkombinationen für die Verwendung in Bauteilen, die LED-Licht ausgesetzt sind, bekannt.

Die der vorliegenden Erfindung zugrundeliegende Aufgabe bestand demnach darin, farbkorrigierte oder gefärbte thermoplastische Formmassen, die LED-Licht ausgesetzt sind, zur Verfügung zu stellen, die während des Betriebes der Lichtquelle durch das LED-Licht keine oder nur minimale Farbveränderungen des Substratmaterials aufweisen und gleichzeitig eine gute Fließfähigkeit, hohe mechanische Integrität, eine hohe Wärmeformbeständigkeit und einen hohen Brechungsindex aufweisen.

Die Farbe der thermoplastischen Formmasse darf sich während der Lebensdauer der LED nicht oder nur unwesentlich verändern.

Hierfür ist es essentiell, dass das durch das zugesetzte Farbmittel eingestellte Absorptionsverhaltens, welches letztendlich zu dem gewünschten Farbeindruck führt, unter Einwirkung von LED-Licht möglichst konstant bleibt. Hierzu darf sich die Intensität einer für ein spezielles Farbmittel charakteristischen Absorptionsbande nicht stärker als 50%, bevorzugt nicht stärker als 40 %, besonders bevorzugt nicht stärker als 30 % verändern.

Alternativ kann die Stabilität der verwendeten Farbmittel über den Abbau dieser während einer definierten Zeit unter Einwirkung von LED-Licht beurteilt werden. Hierzu kann nach dem Lambert-Beerschen Gesetz eine Korrelation zwischen den charakteristischen Absorptionsbanden und der in der Probe vorliegenden Konzentration des Farbmittels erstellt werden. Daraus lässt sich die Konzentrationsänderung, also der prozentuale Abbau des Farbmittels, über den Prüfzeitraum berechnen.

Eine weitere Möglichkeit zur Bestimmung der Stabilität des Farbmittels lässt sich aus der Veränderung der optischen Eigenschaften entwickeln Hier können beispielsweise gängige optische Kenngrößen wie die Transmission oder der Yellowness Index zur Beurteilung herangezogen werden.

Um eine ausreichende Fließfähigkeit der thermoplastischen Formmasse und damit eine ausreichend gute Verarbeitbarkeit zu gewährleisten, muss der MVR (gemessen nach ISO 1133 bei 300°C und 1,2 kg) zwischen 5 $cm^3$/(10 Min.) und 80 $cm^3$/(10 Min.), bevorzugt zwischen 12 $cm^3$/(10 Min.) und 80 $cm^3$/(10 Min.), weiter bevorzugt zwischen 35 $cm^3$/(10 Min.) und 80 $cm^3$/(10 Min.) und besonders bevorzugt zwischen 60 $cm^3$/(10 Min.) und 80 $cm^3$/(10 Min.) liegen.

Für eine ausreichende mechanische Stabilität zur Integration von Befestigungselementen wie beispielsweise Schnapphaken, Steck- und Schraubverbindungen muss die Kerbschlagzähigkeit der thermoplastischen Formmassen (gemessen nach ISO 179/1eA bei Raumtemperatur an 3 mm dicken Probekörpern) mindestens 40 $kJ/m^2$ betragen, bevorzugt zwischen 50 $kJ/m^2$ und 130 $kJ/m^2$ , weiter bevorzugt zwischen 55 $kJ/m^2$ und 120 $kJ/m^2$ und besonders bevorzugt zwischen 55 $kJ/m^2$ und 70 $kJ/m^2$ liegen.

Das Material muss eine erhöhte Wärmeformbeständigkeit aufweisen, um den erhöhten Temperaturen während des Betriebs der Beleuchtungseinheit standzuhalten und dabei die präzise Formgebung nicht zu verlieren. Die Vicat-Erweichungstemperatur (gemessen nach ISO 306 (50N, 120°C/h)) muss mindestens 70°C betragen. Bevorzugt liegt die Vicat-Erweichungstemperatur zwischen 120°C und 220°C, weiter bevorzugt zwischen 130°C und 200°V, noch weiter bevorzugt zwischen 140°C und 180°C, besondern bevorzugt zwischen 140°C und 150°C

Der Brechungsindex des Materials muss (gemessen nach ISO 489, Methode A) mindestens 1,400 betragen. Bevorzugt liegt der Brechunsgindex zwischen 1,450 und 1,600, weiter bevorzugt zwischen 1,480 und 1,590, noch weiter bevorzugt zwischen 1,500 und 1,590, besonders bevorzugt zwischen 1,550 und 1,590

Die Aufgabe der vorliegenden Erfindung wurde überraschenderweise durch die Verwendung einer speziellen Kombination aus ausgewählten Farbmitteln gemäß Anspruch 1 gelöst. Die Erfindung betrifft die Verwendung der Komponenten c) und d) gemäß Anspruch 1 in Polymerzusammensetzungen zur Herstellung von eingefärbten geformten Gegenständen mit hoher Farbstabilität gegenüber der Einwirkung von LED-Licht.

Die bevorzugten Polymerzusammensetzungen enthalten, bezogen auf ihre Gesamtzusammensetzung,

a) transparentes oder transluzentes Polymer oder Polymergemisch in einer Menge, daß diese mit den Komponenten b) bis g) 100 Gew.-% ergibt,

b) optional 0 - 2500 ppm, vorzugsweise 20 ppm bis 2000 ppm, weiter bevorzugt 100 ppm bis 1500 ppm, besonders bevorzugt 200 ppm bis 1000 ppm, ein oder mehrere Stabilisatoren,

c) 0,001 ppm bis 10000,000 ppm, bevorzugt 0,005 ppm bis 1000,000 ppm, weiter bevorzugt 0,01 ppm bis 500,00 ppm, besonders bevorzugt 0,01 ppm bis 5,00 ppm mindestens eines Farbmittels der Struktur 1a und/oder 1b,

d) 0,001 ppm bis 10000,000 ppm, bevorzugt 0,005 ppm bis 1000,000 ppm, weiter bevorzugt 0,01 ppm bis 500,00 ppm, besonders bevorzugt 0,01 ppm bis 5,00 ppm mindestens eines Farbmittels aus der Gruppe, welche die von Struktur 1a und/oder 1b verschiedenen Farbmittel auf Perinonbasis und Farbmittel auf Basis eines Indanthrons, Phthalocyanins und/oder Phthalocyaninkomplexes umfaßt,

e) optional 0 ppm bis 3000 ppm, bevorzugt 100 ppm bis 1000 ppm, weiter bevorzugt 150 ppm bis 500 ppm, eines oder mehrerer Entformer,

f) optional 0 ppm bis 6000 ppm, bevorzugt 500 ppm bis 5000 ppm, weiter bevorzugt 1000 ppm bis 2000 ppm, eines oder mehrerer UV-Absorber,

g) optional 0 ppm bis 500.000 ppm, bevorzugt 100 ppm bis 100.000 ppm, weiter bevorzugt 500 ppm bis 50.000 ppm, eines oder mehrerer Additive.

Bei farbneutralen Einstellungen sind die Komponenten c) und d) jeweils vorzugsweise in einem Anteil von 0,001 ppm bis 5,000 ppm neben den Komponenten a), b), e), f) und g) enthalten, während intensiv gefärbten Einstellungen die Komponenten c) und d) jeweils vorzugsweise in einem Anteil von größer als 5,000 ppm bis 10000,000 ppm, weiterhin vorzugsweise von 10 ppm bis 5000 ppm, weiter bevorzugt 10 ppm bis 1000 ppm, und besonders bevorzugt von 10 ppm bis 500 ppm neben den Komponenten a), b), e), f) und g) enthalten.

Komponente a)

Das transparente Polymer a) ist vorzugsweise ein transparenter oder transluzenter thermoplastischer Kunststoff, bevorzugt Polycarbonat (PC), Copolycarbonat, Polyestercarbonat, Polystyrol (PS), Styrol-Copolymere, Polyalkylene wie Polyethylen (PE) und Polypropylen (PP), aromatische Polyester wie Polyethylenterephthalat (PET) und Polybutylenterephthalat (PBT), PET-Cyclohexandimethanol-Copolymer (PETG), Polyethylennaphthalat (PEN), Poly- oder Copolymethylmethacrylate wie Polymethylmethacrylat (PMMA), Polyimide (z.B. PMMI), Polyethersulfone, thermoplastische Polyurethane, cyclische Olefinpolymere oder -copolymere (COP bzw. COC)"weiter bevorzugt Polycarbonat, Copolycarbonat, aromatische Polyester, cyclische Olefinpolymere oder -copolymere oder Polymethylmethacrylat, oder Mischungen der genannten Komponenten, sofern sie transparent oder transluzent sind, und besonders bevorzugt Polycarbonat und Copolycarbonat.
Das transparente Polymer a) kann in einer alternativen Ausführungsform auch ein Duroplast oder eine Mischung von Duroplasten mit den entsprechenden optischen Eigenschaften sein oder diese enthalten.
Auch Mischungen von mehreren transparenten oder transluzenten Polymeren, sofern sie transparent oder transluzent miteinander mischbar sind, sind möglich, wobei eine Mischung aus Polycarbonat mit PMMA oder Polyester bevorzugt ist.
Eine bevorzugte Ausführungsform enthält als Komponente a) eine Mischung aus Polycarbonat und PMMA mit weniger als 2%, vorzugsweise weniger als 1%, weiter bevorzugt weniger als 0,5%, noch weiter bevorzugt mit 0,2% und besonders bevorzugt mit 0,1% PMMA bezogen auf die Menge Polycarbonat, wobei das PMMA bevorzugt ein Molgewicht <40.000 g/mol aufweist.
Eine weitere alternative Ausführungsform enthält eine Mischung aus PMMA und PC mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.
Polycarbonate im Sinn der vorliegenden Erfindung sind sowohl Homopolycarbonate als auch Copolycarbonate; die Polycarbonate können in bekannter Weise linear oder verzweigt sein.
Die Herstellung der Polycarbonate erfolgt in bekannter Weise aus Diphenolen, Kohlensäurederivaten, gegebenenfalls Kettenabbrechern und Verzweigern.
Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience

Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonatstandard) zwischen 5000 und 200.000 g/mol, vorzugsweise zwischen 18.000-32.000 g/mol, weiter bevorzugt zwischen 20.000-31.000 g/mol, noch weiter bevorzugt zwischen 20.000-26.000 g/mol, und besonders bevorzugt zwischen 22.000-26.000 g/mol.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Komponente b)

Geeignete Stabilisatoren im Sinn der vorliegenden Erfindung sind Thermostabilisatoren ausgewählt aus den Gruppen der Phosphate, Phosphite, Phosphonite und Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos® 168), Diisodecylpentaerythritoldiphosphit, Bis(2,4-di-tert-butylphenyl)-pentaerythritoldiphosphit, Bis(2,6-di-tert-butyl-4-methylphenyl)pentaerythritol-diphosphit, Bis(2,4-di- cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, Bis(2,6-di-tert-butyl-4-methylphenyl)pentaerythritoldiphosphite (PEP-36 ), 5-Butyl-5-ethyl-2-(2,4,6-tri-tert-butylphenoxy)-1,3,2-dioxaphosphiran, Triphenylphosphin (TPP), Trialkylphenylphosphin, Bisdiphenylphosphinoethan oder ein Trinaphthylphosphin. Insbesondere bevorzugt werden Triphenylphosphin (TPP), Irgafos® 168 (Tris(2,4-di-tert-butylphenyl)-phosphit), PEP-36 (Bis(2,6-di-tert-butyl-4-methylphenyl)pentaerythritoldiphosphite) und Tris(nonylphenyl)phosphit oder deren Mischungen eingesetzt.

Phosphatstabilisatoren im Sinne der vorliegenden Erfindung sind beispielsweise Phosphate der Formeln (I) oder Mischungen dieser Phosphate.

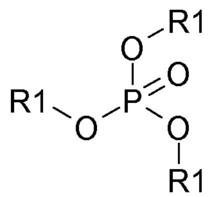

(I)

wobei R1 unabhängig voneinander für verzweigte Alkylreste und/oder optional substituierte Arylreste stehen, wobei der Alkylrest vorzugsweise ein $C_1$ - $C_{18}$-Alkyl, weiter bevorzugt ein $C_1$ - $C_8$-Alkyl, ist.

Der Arylrest ist vorzugsweise mit $C_1$ - $C_8$-Alkyl, verzweigtem $C_1$ - $C_8$-Alkyl, oder Cumyl substituiert, wobei die Substituenten gleich oder verschieden sein können, gleiche Substituenten jedoch bevorzugt sind.

Bevorzugt sind die Arylreste in den Positionen 2 und 4 oder 2, 4 und 6 substituiert.

Ganz besonders bevorzugt sind tert-Butylsubstituenten in diesen Positionen.

Weiter bevorzugt sind alle R1 gleich.

Ferner können Antioxidantien wie phenolische Antioxidantien, beispielsweise alkylierte Monophenole, alkylierte Thioalkylphenole, Hydrochinone und alkylierte Hydrochinone eingesetzt werden. Vorzugsweise werden Irganox® 1010 (Pentaerythrit-3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt. Besonders bevorzugt wird Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer besonders bevorzugten Ausführungsform besteht das Stabilisatorsystem aus Triphenylphosphin, einem Gemisch von Triphenylphosphin und einem phenolischem Antioxidanz wie Irganox 1076 oder Irganox 1010 und/oder einer Kombination von phenolischem Antioxidanz und Phosphit bevorzugt einem Gemisch aus Irganox 1076 bzw. Irganox 1010 und Irgafos 168 bzw. PEP-36.

In einer weiteren bevorzugten Ausführungsform besteht das Stabilisatorsystem aus einem Phosphin, einem Phosphit und einem phenolischen Antioxidanz, bespielsweise Triphenylphosphin, Irganox 1076 und Irgafos 168.

Komponente c)

Die erfindungsgemäßen Zusammensetzungen enthalten mindestens ein Farbmittel ausgewählt aus der Gruppe, die die Strukturen (1a) und (1b) umfasst.

(1a; 1b)

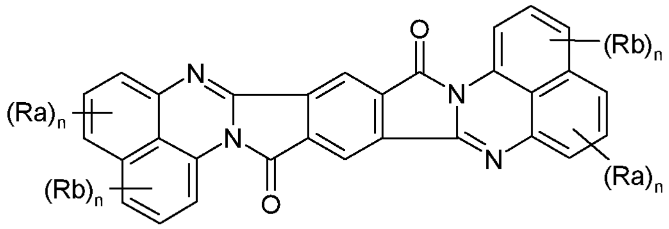

(1a)

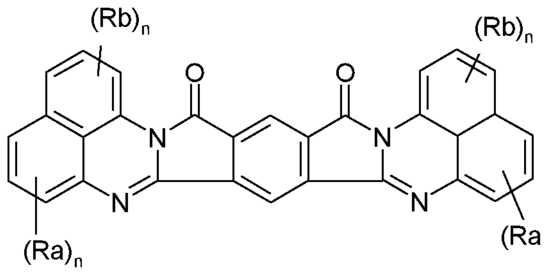

(1b)

wobei

- Ra und Rb unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht unabhängig vom jeweiligen R für eine natürliche Zahl zwischen 0 und 3, wobei der Rest für n=0 Wasserstoff ist.

In einer bevorzugten Ausführungsform sind Ra und/oder Rb Cl und stehen in o und/oder p-Positionen zu den Kohlenstoffatomen, welche die Aminfunktionalitäten tragen, wie z.B. di-orthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta Position zu den Kohlenstoffatomen, welche die Stickstofffunktionalitäten tragen, befinden.

In einer besonders bevorzugten Ausführungsform ist in allen Ringen n=0, so daß alle Ra und Rb = H sind.

Komponente d)

Die erfindungsgemäßen Zusammensetzungen enthalten mindestens ein Farbmittel aus der Gruppe, welche die von Struktur 1a und/oder 1b verschiedenen Farbmittel auf Perinonbasis, Indanthronbasis und Farbmittel auf Basis eines Phthalocyanins oder Phthalocyaninkomplexes umfaßt, insbesondere Farbmittel ausgewählt aus der Gruppe, die die Strukturen (2a), (2b), (3a), (3b) und (4) umfaßt

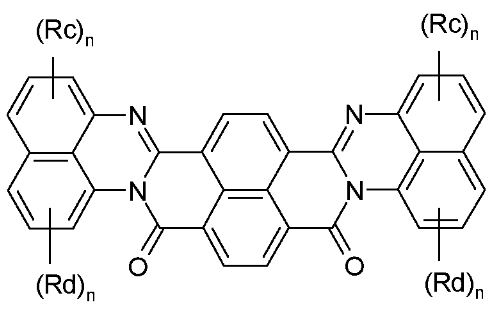

(2a)

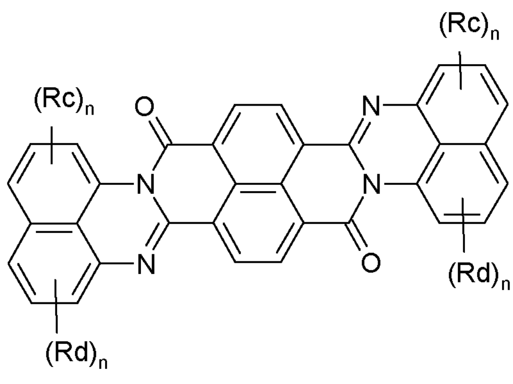

(2b)

wobei

- Rc und Rd unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.

- n steht unabhängig vom jeweiligen R für eine natürliche Zahl zwischen 0 und 3, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. di-orthochlornapthalino-, di-ortho, mono-para-chlornaphthalino, sowie mono-ortho-naphthalino. Ferner stellen in einer bevorzugten Ausführungsform Rc und Rd jeweils einen tert-butylrest dar, welcher sich bevorzugt in meta Position zu den Kohlenstoffatomen, welche die Stickstofffunktionalitäten tragen, befinden.

In einer besonders bevorzugten Ausführungsform ist in allen Ringen n=0, so daß alle Rc und Rd = H sind.

Die Strukturen (1a) und (1b) bzw. (2a) und (2b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-%) von (1a) und (1b) bzw. (2a) und (2b) eingesetzt.

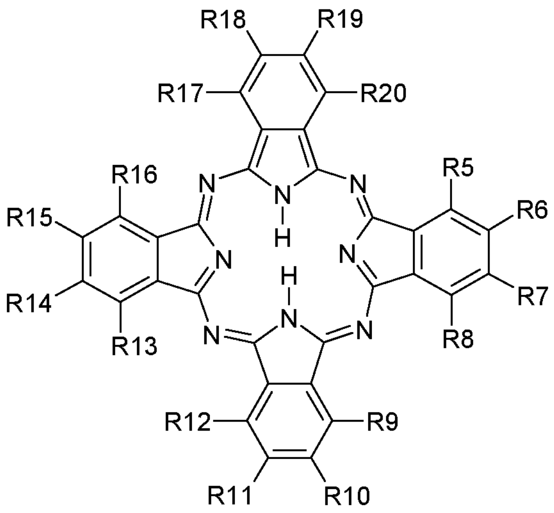

(3a)

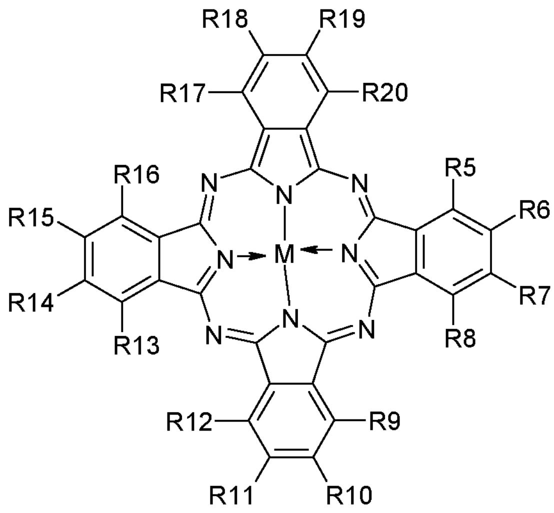

(3b)

Die Reste R(5-20) sind jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6 ; mit R = C1: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7) und Magnesium.

Insbesondere bevorzugt ist die Kombination von M = Cu und R = H für alle Positionen. So ist eine Verbindung der Struktur (3b) mit M=Cu und R(5-20)=H als Heliogen® Blau K 6911D oder Heliogen® Blau K 7104 KW von der BASF AG, Ludwigshafen erhältlich.

Verbindungen der Struktur (3a) sind z.B. als Heliogen® Blau L 7460 von der BASF AG, Ludwigshafen, erhältlich.

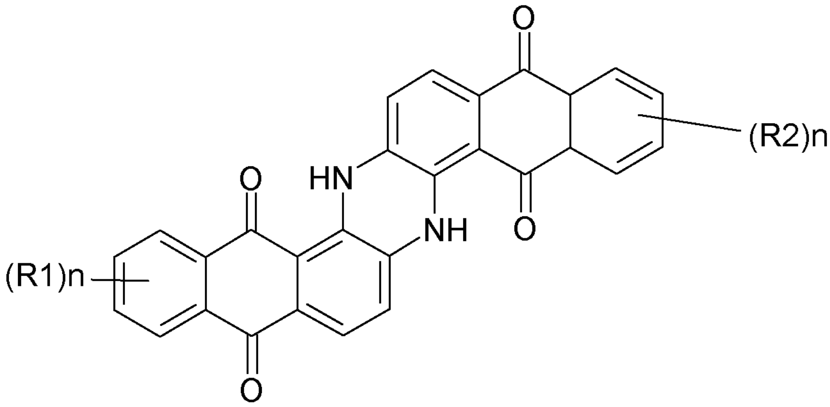

(4)

wobei

- R1 und R2 unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.

- n steht für eine natürliche Zahl zwischen 0 und 4.

In einer besonders bevorzugten Ausführungsform ist in allen Ringen n=0, so daß alle R1 und R2 = H sind.

Farbmittel dieser Struktur (4) sind kommerziell erhältlich unter der Paliogen Blau Reihe der BASF AG.

Bei Verwendung von Farbmitteln der Struktur (4) sind insbesondere die Pigmente bevorzugt, die ein Schüttvolumen (bestimmt nach DIN ISO 787-11) von 2 1/kg - 10 1/kg, bevorzugt 3 1/kg - 8 1/kg, eine spezifische Oberfläche (bestimmt nach DIN 66132) von 5 $m^2/g$ - 60 $m^2/g$, bevorzugt 10 $m^2/g$ - 55 $m^2/g$, und einen pH-Wert (bestimmt nach DIN ISO 787-9) von 4 - 9 aufweisen.

Die Herstellung derartiger Farbmittel ist z.B. in DE 2148101 oder WO 2009/074504 beschrieben worden. Es ist bekannt, dass diese Farbmittel sich aufgrund ihrer hohen Thermostabilität zur Einarbeitung in Kunststoffe eignen. Allerdings beschreibt keines der Dokumente die Stabilität dieser Farbmittel gegen LED-Licht bzw. die Lichtstabilität von thermoplastischen Zusammensetzungen, welche diese Farbmittel enthalten.

In einer weiteren speziellen Ausführungsform werden die in den Komponenten c) und d) beschriebenen Farbmittel auf Perinonbasis als jeweils reine Isomere eingesetzt.

Die Substrate der vorliegenden Erfindung können ferner optional als Komponente e) Entformungsmittel und/oder als Komponente f) UV-Absorber enthalten.

Besonders geeignete Entformungsmittel als Komponente e) der erfindungsgemäßen Zusammensetzung sind z.B. Pentaerythroltetrastearat (PETS) oder Glycerinmonostearat (GMS). Gemäß einer speziellen Ausführungsform der Erfindung enthält die Gesamtzusammensetzung Entformungsmittel in einem Anteil von 0 ppm bis 3000 ppm, bevorzugt 100 ppm bis 1000 ppm, und weiter bevorzugt 150 ppm bis 500 ppm bezogen auf die Masse der Gesamtzusammensetzung.

Die bevorzugten speziellen UV-Stabilisatoren als Komponente f) der vorliegenden Erfindung sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-diphenyl-1,3,5-triazin-2-yl)-5-(hexyloxy)-phenol (Tinuvin® 1577, Ciba Spezialitätenchemie, Basel), sowie der Benzophenone 2,4-Dihydroxy-benzophenon (Chimasorb® 22 , Ciba Spezialitätenchemie, Basel) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate

(Hostavin® B-Cap, Clariant AG).

Besonders bevorzugte spezielle UV-Stabilisatoren sind beispielsweise Tinuvin® 360, Tinuvin® 350, Tinuvin® 329, Hostavin® B-CAP, besonders bevorzugt TIN 329 und Hostavin® B-Cap.

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm bezogen auf die Gesamtzusammensetzung.

Die erfindungsgemäßen Polymer-Zusammensetzungen können neben den erfindungsgemäßen Stabilisatoren optional noch weitere übliche Polymeradditive als Komponente g) enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Flammschutzmittel, von b) verschiedenen Stabilisatoren, optischen Aufheller, Lichtstreumittel und Füll- und Verstärkungsstoffe in den für die jeweiligen Thermoplasten üblichen Mengen.

Bevorzugt werden die weiteren Polymeradditive g) in Mengen von 0 ppm bis 500.000 ppm, bevorzugt 100 ppm bis 100.000 ppm, und weiter bevorzugt 500 ppm bis 50.000 ppm, jeweils bezogen auf die Menge der jeweiligen Polymer-Gesamtzusammensetzungen, eingesetzt. Auch Mischungen mehrerer Zusatzstoffe sind geeignet.

Die erfindungsgemäße Formmasse kann zu speziellen Formteilen mit der Funktion von optischen Bauteilen wie Lichtleitern, Linsen, Abdeckungen verarbeitet werden, welche insbesondere für die Verwendung in Kombination mit LED-Licht geeignet sind.

Das bevorzugte Spritzgiessverfahren, mit dem das Kunststoffformteil hergestellt wird, hat den Vorteil eines hohen Freiheitsgrades in der Formgebung des optischen Bauteils. Der Kunststoffkörper kann - falls gewünscht - eine geringe Tiefe aufweisen, was für flächige Applikationen vorteilhaft ist. Die Möglichkeit, elektronische Komponenten (z.B. eine LED) direkt in Vertiefungen des Formteiles einzusetzen, hat verschiedene Vorteile. So lässt sich die elektronische Komponente präzise auf dem Kunststoffformteil positionieren.

Eine Vertiefung im optischen Bauteil kann derart ausgestaltet sein, dass die Oberseite der elektronischen Komponenten annähernd bündig mit der Formteiloberseite abschließt. Diese Anordnung hat den Vorteil, dass die Herstellung eines elektrischen Kontakts der elektronischen Komponenten mit weiteren Komponenten und/oder elektrischen Leitern auf vorteilhafte Art und Weise erfolgen kann.

Die Lichttransmission eines im Sinne dieser Erfindung farbkorrigierten transparenten Substratmaterials sollte bei mindestens 80 %, vorzugsweise bei mindestens 85 %, weiter bevorzugt bei mindestens 88 %, besonders bevorzugt bei mindestens 89 % liegen (gemessen nach ISO 13468-2 bei 4 mm Probenkörperdicke).

Bei im Sinne dieser Erfindung stark gefärbten Materialien kann die Transmission bei hoher Konzentration der Komponenten c und d auch kleiner 80% sein, gemessen nach den oben beschriebenen Parametern.

Methoden zur Herstellung der erfindungsgemäßen Polymer-Zusammensetzungen sind dem Fachmann grundsätzlich bekannt.

Die Herstellung der erfindungsgemäßen Polymer-Zusammensetzungen enthaltend die Komponenten a) bis g) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäßen Zusammensetzung durch bekannte Verfahren oder als Masterbatch eingebracht werden.

Die Verwendung von Masterbatchen ist insbesondere zum Einbringen der Farbmittel bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinhiet einer Spritzgußmaschine erfolgen. Hierbei wird die Schmelze im anschließenden Schritt direkt in einen Formkörper überführt.

In einer besonderen Ausführungsform wird das erfindungsgemäße Farbmittelgemisch vor der Einarbeitung in die thermoplastische Polymermatrix ggf. mit weiteren Additiven zu einem Masterbatch vermischt, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Farbmittel besser in der Polymermatrix verteilt werden kann. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

Die Herstellung der Kunststoffformteile kann vorzugsweise durch Spritzguß erfolgen, Zusätzlich kann der transparente oder transluzente Kunststoffformkörper an seiner Oberfläche Strukturen mit optischem Effekt zur zusätzlichen Steuerung des Lichtes, beispielsweise Mikrolinsen, aufweisen

Alternativ zu dem vorgenannten Kunststoffformkörper mit Mikrolinsen zur Fokussierung und Effizienzsteigerung kann ein Kunststoffformkörper (Kunststofffolie) mit Diffusoreigenschaften ausgestattet werden, so dass der Eindruck einer "Flächenleuchte" anstelle einer Leuchte mit punktuellen Lichtquellen entsteht.

Werden in diesen Kunststoffformkörper oder diese Kunststofffolie phosphoreszierende Pigmente (sogenannte Phosphore) eingearbeitet oder aufgetragen, so kann beispielsweise weisses Licht erzeugt werden, wenn blaue LEDs eingesetzt wurden. Durch den Einsatz der Phosphore können so verschiedene Effekte erzielt werden.

Die erfindungsgemäßen Formmassen können in verschiedensten geformten Bauteilen eingesetzt werden. Diese Bauteile können in den verschiedensten Anwendungsbereichen Verwendung finden, bevorzugt sind solche Anwendungsbereiche, welche Licht von Hochleistungs-LEDs ausgesetzt sind.

Geformte Gegenstände sind beispielhaft und vorzugsweise lichtdurchlässige Gegenstände wie beispielhaft und vorzugsweise Abdeckungen und Linsen für Leuchten in Kraftfahrzeugen oder anderen Beleuchtungsanwendungen, Linsen wie z.B. Brillengläser, Folien, Bändchen, Platten, Stegplatten, Stegmehrfachplatten, Gefäße, Rohre und sonstige Profile die nach den üblichen Methoden, wie z.B. Heißpressen, Spinnen, Extrudieren oder Spritzgießen hergestellt werden. Die Polymerzusammensetzungen können auch zu Gießfolien verarbeitet werden.

Mögliche Anwendungen bzw. Anwendungsbereiche der erfindungsgemäßen Kunststoffzusammensetzungen sind weiterhin:

1. Linsen zum Fokussieren und bestimmungsgemäßen Verteilen des Lichtes, sowie Lichtleiter

2. Lichtdurchlässige Platten, insbesondere Hohlkammerplatten, beispielsweise als Verscheibung von Gebäuden wie Bahnhöfen, Gewächshäusern und Beleuchtungsanlagen.

3. Leuchten, z. B. Scheinwerferabdeckungen, Blinkerkappen oder andere optische Elemente im Scheinwerfer

4. Leuchten für den Innenbereich von Wohn- und Bürogebäuden und Leuchten für den Außenbereich wie z.B. Straßenlaternen

5. Beleuchtungsvorrichtungen in Flachbildfernsehern

6. Beleuchtungsvorrichtungen von Displays elektronischer Geräte wie z.B. Taschenrechner, Mobiltelefone

7. Sicherheitsscheiben wie sie in Gebäuden, Fahrzeugen und Flugzeugen erforderlich sind.

8. Visiere und Brillen sowie als Schilde von Helmen in verschiedensten Farbtönungen

9. Extrusions- und Lösungsfolien für Displays oder Elektromotoren, auch Skifolien.

10. Blaskörper

11. Ampelgehäusen, Ampelabdeckungen, Ampellinsen oder Verkehrsschilder.

12. Medizinische Anwendungen

13. Bauteile von Haushaltsartikeln, Elektro- und Elektronikgeräten.

14. Automobilteile, wie Verglasungen, Armaturenbretter, Karosserieteile und Zierteile.

Von Interesse ist auch die Verwendung der erfindungsgemäßen Kunststoffzusammensetzung zur Herstellung von Mehrschichtsystemen. Hierbei wird die erfindungsgemäße Kunststoffzusammensetzung in einer oder mehreren

Schicht(en) auf einen geformten Gegenstand aus einem Kunststoff welcher nicht gefärbt oder anders gefärbt ist, aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguß. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung

Die erfindungsgemäßen Formmassen sind besonders geeignet für transparente farbneutrale oder leicht gebläute Einstellungen der Thermoplasten, doch lassen sich auch andersfarbige sowie intensiv gefärbte Formmassen darstellen.

Die erfindungsgemäßen Kunststoffzusammensetzungen lassen sich auch über sogenannte "Masterbatche" erhalten, in denen die gewünschte Additivzusammensetzung bereits komplett oder teilweise vorgemischt ist. Entsprechend der gewünschten Zusammensetzung des Kunststoffes werden dann nur noch entsprechende Mengen dieses Masterbatches dem Polycarbonat zugesetzt, beispielsweise bei der Kompoundierung oder vor dem Verspritzen.

Die Bestimmung der Farbe in Transmission erfolgte mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

Die Bestimmung der Farbe in Transmission erfolgte mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgte für Lichtart D 65 und 10° Normalbeobachter.

Visuelle Lichtttransmission:

Die Transmissionsmessungen wurden an einem Lambda 900 Spektralphotometer der Firma Perkin Elmer mit Photometerkugel durchgeführt (d.h. Bestimmung der Gesamttransmission sowohl durch Messung der diffusen und direkten Transmission).

Der Yellowness-Index YI wurde aus den so erhaltenen Daten nach ASTM E313 berechnet.

Beispiele:

Als Basispolymer wurde ein lineares BPA-Polycarbonate eingesetzt mit einem MVR von 17 $cm^3$/10 min. (gemessen nach ISO 1133 bei 250°C und 2,16 kg) bzw. 61 $cm^3$/10 Min. (gemessen nach ISO 1133 bei 300°C und 1,2 kg)

Es wurden folgende Farbmittel eingesetzt:

Ein Farbmittelgemisch [1] entsprechend den Strukturen 1a/1b mit n=0 an allen Ringen, also alle Ra und Rb = H, in dem die Komponenten 1a und 1b (mit dem beschriebenen Substitutionsmuster) im Verhältnis (Gewichtsprozent) von 1:1 vorliegen. Dieses Farbmittelgemisch dient aufgrund seiner Absorptionscharakteristik als Violett-Komponente. Die Herstellung dieses Farbmittelgemisches ist im Folgenden separat beschrieben.

Ein Farbmittelgemisch [2] entsprechend den Strukturen 2a/2b mit n=0 an allen Ringen, also alle Rc und Rd = H, in dem die Komponenten 2a und 2b (mit dem beschriebenen Substitutionsmuster) im Verhältnis (Gewichtsprozent) von 1:1 vorliegen. Dieses Farbmittelgemisch dient aufgrund seiner Absorptionscharakteristik als Blau-Komponente. Auch die Herstellung dieses Farbmittelgemisches ist im Folgenden separat beschrieben.

Ein Farbmittel [3] entsprechend der Struktur 3b mit M=Cu und R5-R20=H, auch bekannt unter dem Farbindexnamen Pigment Blue 15:3 und erhältlich beispielsweise bei der BASF AG unter dem Namen Heliogen ® Blau K 7090.

Ein Farbmittel [4] entsprechend der Struktur 4 mit R1 und R2=H, auch bekannt unter dem Farbindexnamen Pigment Blue 60 und erhältlich beispielsweise bei der BASF AG unter dem Namen Paliogen Blau L 6470.

Als Vergleichssysteme wurden für die für Polycarbonate gängigen Anthrachinon-basierten Farbmittel Macrolex Violett 3R (Farbindex Solvent Violet 36) und Macrolex Blau RR (Farbindex Solvent Blue 97) der Firma Lanxess verwendet.

Die Zusammensetzungen der Proben ist in Tabelle 1 dargestellt, zu den beschriebenen Farbmittelgehalten bestehen die Proben aus so viel Matrixpolymer, dass die Gesamtzusammensetzung 100% ergibt.

Zur Bewertung der Stabilität der einzelnen Farbmittelsysteme wurden die Proben 1 bis 6 sowie die Vergleichsprobe A und B nach dem oben beschriebenen Verfahren angefertigt. Da die Proben in zwei separaten Gruppen gefertigt

wurden (Gruppe 1: Proben 1-3 und Vergleichsprobe A; Gruppe 2: Proben 4-6 und Vergleichsprobe B), sind in den Untersuchungen zwei Blindproben (A und B analog zu den Vergleichsproben) enthalten. Diese Blindproben enthalten nur das Matrixpolymer und keinerlei Farbmittel, sind sonst aber allen Verarbeitungsschritten wie die anderen Proben unterzogen worden.

Tabelle 1: Zusammensetzung der Proben zur Bestimmung der Stabilität Farbmittel

| **Probe** | **Komponente violett** | **Gehalt Komponente violett [ppm]** | **Komponente blau** | **Gehalt Komponente blau [ppm]** |
|---|---|---|---|---|
| **Vergleichsprobe A** | Macrolex Violett 3R | 3,00 | Macrolex Blau RR | 2,00 |
| **Probe 1** | [1] | 2,40 | [2] | 2,00 |
| **Probe 2** | [1] | 4,50 | [3] | 1,00 |
| **Probe 3** | [1] | 2,25 | [4] | 2,00 |
| **Vergleichsprobe B** | Macrolex Violett 3R | 0,60 | Macrolex Blau RR | 0,40 |
| **Probe 4** | [1] | 0,48 | [2] | 0,40 |
| **Probe 5** | [1] | 0,90 | [3] | 0,20 |
| **Probe 6** | [1] | 0,45 | [4] | 0,40 |
| **Blindproben A und B** | - | - | - | - |

Herstellung von Substanzen der Komponenten [1] und [2]

Unter anderem wurden in den erfindungsgemäßen Beispielen Strukturen der Formel (1a) und (1b) (=[1]) sowie (2a) und (2b) (=[2]) eingesetzt. Die Herstellung dieser Farbstoffe erfolgte in Anlehnung an DE 2148101 wie folgt:

Herstellung von [1]

5,62g (0,025mol) Benzol-1,2,4,5-tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 125ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80°C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 500ml Wasser gegeben. Der Niederschlag wird abfiltriert, mit Wasser gewaschen und im Hochvakuum bei 80 °C getrocknet. Man erhält 12,5g lila-farbendes Pulver.

Herstellung von [2]

6,71g (0,025mol) Naphthalin-1,4,5,8-tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 152ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80 °C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 125ml Wasser gegeben. Der Niederschlag wird abfiltriert, mit heißem Wasser gewaschen und im Hochvakuum bei 80 °C getrocknet. Man erhält 13,7g lila-farbendes Pulver.

Die in Tabelle 1 benannten Gehalte wurden über eine schrittweise Verdünnung von Polymer/Farbmittel-Gemischen hergestellt.

Hierzu wurden jeweils Masterbatche mit 10ppm Farbmittelgehalt hergestellt, die bei Bedarf einem weiteren Verdünnungsschritt mit Basispolymer im Verhältnis Masterbatch/Polymer = 1:9 unterzogen wurden. Ausgehend von den geeigneten Masterbatchen wurden dann durch Mischung von Violett- und Blaukomponenten-Masterbatchen mit gegebenenfalls weiterem Basismaterial die Zielgehalte wie in Tabelle 1 angegeben eingestellt.

Die vollständigen Durchmischungen sowohl der Masterbatche als auch der Zielproben wird unter Ausnutzung der elektrostatischen Wechselwirkungen durch 30minütiges Mischen der Granulate und Farbmittel in einem verschlossenen PE-Beutel auf einem Rhönradmischer erreicht.

Aus den so erhaltenen Polymerzusammensetzungen wurden Probenkörper mit den Maßen 60*40*4mm hergestellt. Dies erfolgte mittels Spritzguß, die abschließende Homogenisierung der Mischung erfolgte in der Plastifiziereinheit der Spritzgussmaschine.

Zur Herstellung der Probekörper und Homogenisierung der Polymerzusammensetzungen wurde verwendet eine Arburg Allrounder 370-800-150 mit einem Schneckendurchmesser von 25mm. Die Verarbeitung erfolgte mit einer Massetemperatur von 300°C und einer Werkzeugtemperatur von 80°C mit einfacher Verweilzeit und einer Zykluszeit von 43,0 Sekunden.

Die Zielgehalte an Farbmittel in der Endzusammensetzung wurden nicht separat überprüft. Durch die gemessenen Transmissionsspektren ist die Anwesenheit der Farbmittel bewiesen. Zur Überprüfung der relativen Farbmittelstabilitäten ist der genaue Anfangsgehalt der Farbmittel unwichtig, da die relative Veränderung bewertet wird.

Die Bewertung der Stabilitäten gegenüber LED-Licht erfolgte durch die Betrachtung der Veränderungen in den optischen Eigenschaften der Probenkörper vor und nach Belichtungen mit LED Licht.

Die Aufnahme der wellenlängenaufgelösten Transmissionspektren erfolgte wie oben beschrieben, wobei der Strahlengang des Messgerätes und die Position der Probe durch eine Halterung und Schablone so festgelegt wurden, dass reproduzierbar nur die in der folgenden LED-Belichtung belichteten Stellen vermessen wurden.

Die Belichtung mit LED-Licht erfolgte in speziell angefertigten Anlagen. Die LED-Modelle der einzelnen Testanlagen sind im Folgenden beschrieben. Die weiteren Testbedingungen sind beschrieben durch die kontrollierte Probentemperatur, die Messung der radiometrischen Leistungsdichte (Bestrahlungsstärke) an der Probenoberfläche, die Betriebsbedingungen (Bestromung) der LED-Module und den Abstand zwischen Probe und einstrahlender LED.

Alle Belichtungsanlagen weisen einen Abstand zwischen Probe und LED von 1mm auf. Die Proben werden konstant auf einer Temperatur von 120°C gehalten. Die verwendeten LEDs werden mit einem Betriebsstrom von 0,7 Ampere betrieben.

Anlage A verwendet weiße LEDs mit einem lokalen Maximum (in der Strahlungsverteilung zwischen 360 nm und 480 nm) bei 465 nm. Solche LEDs können beispielweise unter dem Namen LEW E3A bei der Firma Osram bezogen werden. Die Bestrahlungsstärke an der Probenoberfläche beträgt 22,4 $W/cm^2$.

Anlage B verwendet blaue LEDs mit einem lokalen Maximum (in der Strahlungsverteilung zwischen 360 nm und 480 nm) bei 465 nm. Solche LEDs entsprechen dem oben beschriebenen Produkt LEW E3A der Firma Osram ohne den nachträglich aufgebrachten Phosphoreszenzfarbstoff zur Erzeugung des weißen Lichteindrucks. Die Bestrahlungsstärke an der Probenoberfläche beträgt 22,4 $W/cm^2$.

Anlage C verwendet weiße LEDs mit einem lokalen Maximum (in der Strahlungsverteilung zwischen 360 nm und 480 nm) bei 455 nm. Solche LEDs können beispielweise unter dem Namen ASMT-JW31-NPQK1 bei der Firma Avago bezogen werden. Die Bestrahlungsstärke an der Probenoberfläche beträgt 55,1 $W/cm^2$.

Anlage D verwendet blaue LEDs mit einem lokalen Maximum (in der Strahlungsverteilung zwischen 360 nm und 480 nm) bei 455 nm. Solche LEDs können beispielweise unter dem Namen ASMT-JL31-NPQ01 bei der Firma Avago bezogen werden. Die Bestrahlungsstärke an der Probenoberfläche beträgt 55,1 $W/cm^2$.

Die LED Belichtungen auf den oben beschriebenen Anlagen und mit den oben beschriebenen Bedingungen wurden jeweils für 750h durchgeführt.

Parallel hierzu wurde eine Hochtemperatur-Lagerung der verwendeten Proben durchgeführt, um den Einfluss der in der Belichtung herrschenden Temperatur auf die Proben zu ermitteln. Diese Hochtemperatur-Lagerung erfolgte analog zu den Belichtungsversuchen für 750h bei 120°C, die Messungen der optischen Eigenschaften erfolgten unter identischen Bedingungen.

Nach oben beschriebenen Methoden werden wellenlängenaufgelöste Transmissionsspektren der Proben zu Beginn und nach der Belichtungen aufgenommen.

Für die relativ stark gefärbten Proben 1-3 sowie Vergleichsbeispiel A und die zugehörige Blindprobe A lässt sich die Auswertung der Stabilitäten für die eingesetzten Farbmittel nach dem Lambert-Beerschen Gesetz anwenden.

Aus den Daten der wellenlängenaufgelösten Transmissionsspektren werden die charakteristischen Absorptionen der verwendeten Farbmittel über die Lage der lokalen Absorptionsmaxima bestimmt (siehe Tabelle 2).

Tabelle 2: Lage der charakteristischen Absorptionsbanden der eingesetzten Farbmittel

| char. Bande [nm] | [1] | [2] | [3] | [4] | Macrolex violett 3R | Macrolex blau RR |
|---|---|---|---|---|---|---|
| A | 540 | 665 | 675 | 675 | 545 | 635 |
| B | 590 | | | 740 | 580 | |

Für die Proben 1-3 sowie Vergleichsprobe A und als Referenz die zugehörige Blindprobe A werden folgende Lichttransmissionen bei den charakteristischen Wellenlängen gemessen:

Tabelle 3: wellenlängenaufgelöste Transmission der Proben 1-3 sowie A vor/nach Hochtemperaturlagerung

| Temperaturlagerung Transmission | Vergleichsprobe A | | Probe 1 | | Probe 2 | | Probe 3 | | Blindprobe A | |
|---|---|---|---|---|---|---|---|---|---|---|
| char. Wellenlänge [nm] | 0 h | 750 h | 0 h | 750 h | 0 h | 750 h | 0 h | 750 h | 0 h | 750 h |
| 540 | - | - | 76,67 | 76,70 | 73,79 | 73,55 | 81,08 | 80,77 | 90,21 | 89,76 |
| 545 | 79,35 | 79,53 | - | - | - | - | - | - | 90,14 | 89,94 |
| 580 | 77,60 | 77,86 | - | - | - | - | - | - | 90,38 | 90,30 |
| 590 | - | - | 76,87 | 77,24 | 76,64 | 76,75 | 81,87 | 82,23 | 90,14 | 90,42 |
| 635 | 82,50 | 82,91 | - | - | - | - | - | - | 90,57 | 90,57 |
| 665 | - | - | 84,59 | 84,64 | - | - | - | - | 90,50 | 90,69 |
| 675 | - | - | - | - | 62,23 | 62,47 | 81,48 | 82,09 | 90,47 | 90,72 |
| 740 | - | - | - | - | - | - | 80,49 | 81,32 | 90,26 | 90,63 |

Tabelle 4: wellenlängenaufgelöste Transmission der Proben 1-3 sowie A vor/nach Belichtung in Anlage A

| **Anlage A: Transmission** | **Vergleichsprobe A** | | **Probe 1** | | **Probe 2** | | **Probe 3** | | **Blindprobe A** | |
|---|---|---|---|---|---|---|---|---|---|---|
| **char. Wellenlänge [nm]** | **0 h** | **750 h** | **0 h** | **750 h** | **0 h** | **750 h** | **0 h** | **750 h** | **0 h** | **750 h** |
| **540** | - | - | 76,82 | 80,71 | 73,72 | 77,81 | 80,99 | 83,20 | 89,51 | 89,65 |
| **545** | 79,06 | 88,43 | - | - | - | - | - | - | 89,55 | 89,69 |
| **580** | 77,21 | 88,69 | - | - | - | - | - | - | 89,91 | 89,85 |
| **590** | - | - | 77,04 | 82,54 | 76,56 | 80,73 | 82,02 | 84,57 | 89,67 | 89,96 |
| **635** | 82,16 | 89,50 | - | - | - | - | - | - | 90,15 | 90,03 |
| **665** | - | - | 84,30 | 88,00 | - | - | - | - | 89,99 | 89,93 |
| **675** | - | - | - | - | 62,43 | 67,35 | 81,38 | 84,84 | 90,11 | 90,30 |
| **740** | - | - | - | - | - | - | 80,94 | 84,35 | 90,02 | 90,10 |

Tabelle 5: wellenlängenaufgelöste Transmission der Proben 1-3 sowie A vor/nach Belichtung in Anlage B

| Anlage B: Transmission | Vergleichsprobe A | | Probe 1 | | Probe 2 | | Probe 3 | | Blindprobe A | |
|---|---|---|---|---|---|---|---|---|---|---|
| char. Wellenlänge [nm] | 0 h | 750 h | 0 h | 750 h | 0 h | 750 h | 0 h | 750 h | 0 h | 750 h |
| 540 | - | - | 76,55 | 79,63 | 73,70 | 76,81 | 80,95 | 82,55 | 89,51 | 89,63 |
| 545 | 79,33 | 87,15 | - | - | - | - | - | - | 89,63 | 89,89 |
| 580 | 77,24 | 85,99 | - | - | - | - | - | - | 89,57 | 89,84 |
| 590 | - | - | 76,76 | 80,71 | 76,72 | 79,60 | 81,82 | 83,70 | 89,79 | 90,08 |
| 635 | 82,32 | 86,50 | - | - | - | - | - | - | 90,01 | 90,01 |
| 665 | - | - | 84,11 | 86,39 | - | - | - | - | 89,89 | 89,86 |
| 675 | - | - | - | - | 62,01 | 65,02 | 81,41 | 83,14 | 89,80 | 90,14 |
| 740 | - | - | - | - | - | - | 80,98 | 82,90 | 90,15 | 90,01 |

Tabelle 6: wellenlängenaufgelöste Transmission der Proben 1-3 sowie A vor/nach Belichtung in Anlage C

| Anlage C: Transmission | Vergleichsprobe A | | Probe 1 | | Probe 2 | | Probe 3 | | Blindprobe A | |
|---|---|---|---|---|---|---|---|---|---|---|
| char. Wellenlänge [nm] | 0 h | 750 h | 0 h | 750 h | 0 h | 750 h | 0 h | 750 h | 0 h | 750 h |
| 540 | - | - | 76,42 | 78,11 | 73,09 | 74,89 | 80,60 | 81,77 | 89,68 | 90,12 |
| 545 | 78,86 | 86,94 | - | - | - | - | - | - | 89,70 | 90,20 |
| 580 | 77,09 | 86,61 | - | - | - | - | - | - | 89,82 | 90,15 |
| 590 | - | - | 76,48 | 79,26 | 76,06 | 77,90 | 81,39 | 82,72 | 89,75 | 90,18 |
| 635 | 82,02 | 87,75 | - | - | - | - | - | - | 90,13 | 90,30 |
| 665 | - | - | 83,77 | 86,24 | - | - | - | - | 90,03 | 90,30 |
| 675 | - | - | - | - | 61,49 | 63,62 | 81,22 | 82,88 | 89,86 | 90,41 |
| 740 | - | - | - | - | - | - | 80,78 | 82,56 | 90,26 | 90,39 |

Tabelle 7: wellenlängenaufgelöste Transmission der Proben 1-3 sowie A vor/nach Belichtung in Anlage D

| Anlage D: Transmission | Vergleichsprobe A | | Probe 1 | | Probe 2 | | Probe 3 | | Blindprobe A | |
|---|---|---|---|---|---|---|---|---|---|---|
| **char. Wellenlänge [nm]** | **0 h** | **750 h** | **0 h** | **750 h** | **0 h** | **750 h** | **0 h** | **750 h** | **0 h** | **750 h** |
| **540** | - | - | 76,45 | 77,67 | 73,06 | 74,62 | 80,72 | 81,69 | 89,82 | 90,44 |
| **545** | 79,13 | 84,83 | - | - | - | - | - | - | 89,86 | 90,35 |
| **580** | 76,92 | 83,41 | - | - | - | - | - | - | 89,82 | 90,35 |
| **590** | - | - | 76,68 | 78,22 | 75,99 | 77,36 | 81,59 | 82,85 | 89,89 | 90,64 |
| **635** | 82,12 | 84,76 | - | - | - | - | - | - | 90,11 | 90,61 |
| **665** | - | - | 83,87 | 85,15 | - | - | - | - | 90,15 | 90,58 |
| **675** | - | - | - | - | 61,13 | 63,00 | 81,56 | 82,70 | 90,05 | 90,47 |
| **740** | - | - | - | - | - | - | 80,90 | 82,43 | 90,40 | 90,73 |

In den Messungen der Proben überlagern die Absorption der Farbmittel und die Absorption des Basismaterials. Durch die Betrachtung des Differenzspektrums von gefärbter Probe und Blindprobe (ungefärbt) kann ausschließlich die Absorption des Farbmittels ermittelt werden.

Für die Absorption des Farbmittels bei der charakteristischen Wellenlänge λ (Extinktion $E_\lambda$) gilt

$$E_\lambda = -\lg\left(\frac{I_1}{I_0}\right) = \varepsilon_\lambda \cdot c \cdot d$$

Also gilt für die Konzentration c

$$c = -\lg\left(\frac{I_1}{I_0}\right) \cdot \frac{1}{\varepsilon_\lambda} \cdot \frac{1}{d}$$

Zur hier benötigten Beurteilung der relativen Stabilität der Farbmittel während einer Belichtung mit LED-Licht bietet es sich an, die relative Veränderung der Konzentration des Farbmittels zu betrachten. So ergibt sich das Verhältnis der Konzentration des Farbmittels zum Ende der Belichtung ($c_{750h}$) zur Konzentration zu Beginn der Belichtung ($c_{0h}$) mit

$$\frac{c_{750h}}{c_{0h}} = \frac{-lg\left(\frac{I_1}{I_0}\right)_{750h}}{-lg\left(\frac{I_1}{I_0}\right)_{0h}} \cdot \frac{\varepsilon_\lambda}{\varepsilon_\lambda} \cdot \frac{d}{d}$$

Da der Extinktionskoeffizienz $\varepsilon_\lambda$ als Materialkonstante und die Dicke d wegen der Vermessung der selben Probe vor und nach der Belichtung konstant sind, fallen diese Faktoren aus der Gleichung heraus. Die Messung der wellenalängenaufgelösten Transmissionsspektren liefert für die Wellenlänge λ den prozentualen Anteil des durch die Probe fallenden Lichtes relativ zum eingestrahlten Licht und somit den in der Gleichung geforderten Term $\frac{I_1}{I_0}$ (=Transmission$_\lambda$).

Unter diesen Voraussetzungen kann leicht aus den vorhandenen Daten der prozentuale Abbau der Farbmittel während der Belichtung bestimmt werden (Tabelle 8).

Nach den oben beschriebenen Berechnungen nach Lambert-Beer ergeben sich für die eingesetzten Farbmittel folgende prozentuale Restgehalte nach 750h Belichtung bzw. Temperaturlagerung als Referenz:

Tabelle 8: prozentuale Restgehalte der Farbmittel nach 750h (für [1] ist der Mittelwert aus den Proben 1-3 angegeben)

| Anlage | [1] | [2] | [3] | [4] | Macrolex violett 3R | Macrolex blau RR |
|---|---|---|---|---|---|---|
| (Temperatur) | 98% | 102% | 100% | 95% | 97% | 95% |
| A | 69% | 33% | 80% | 62% | 10% | 6% |
| B | 78% | 59% | 89% | 80% | 28% | 45% |
| C | 89% | 64% | 93% | 84% | 28% | 31% |
| D | 94% | 86% | 94% | 89% | 51% | 72% |
| Mittelwert A-D | 83% | 61% | 89% | 79% | 29% | 39% |

Aus der sich für die Thermolagerung rechnerisch ergebenen prozentualen Restgehalten kann die Fehlerbreite des Verfahrens abgeschätzt werden: da eine Zunahme des Farbmittelgehaltes nicht möglich ist, sich aber berechnete Gehalte von 102% ergehen, ist ein Fehler von ca. ± 2% (absolut) anzunehmen.

Die in Tabelle 8 aufgeführten berechneten Restgehalte an Farbmittel in den Proben zeigen deutlich, dass die Stabilität der erfindungsgemäßen Farbmittel [1], [2], [3] und [4] denen der Vergleichsfarbmittel deutlich überlegen ist. Die über alle Belichtungsversuche gemittelten Restwerte liegen für die erfindungsgemäße Violettkomponente [1] bei 83%, das entspricht einem mittleren Abbau während der Belichtungen von 17% gegenüber einem Abbau von 71% des Vergleichssystems Macrolex violett 3R unter identischen Bedingungen. Analoge Ergebnisse zeigen sich bei den erfindungsgemäßen Blaukomponenten [2], [3] und [4] mit einem mittleren Abbau zwischen 39% (61% Restgehalt [2]) und

11% (89% Restgehalt [3]) gegenüber einem Abbau von 61% der Vergleichskomponente Macrolex Blau RR. Auch unter Berücksichtigung der oben diskutierten Fehler ist dies eine deutlich erhöhte Stabilität der erfindungsgemäßen Farbmittel unter LED-Belichtung verglichen mit den antrachinonbasierten Vergleichssystemen.

Für die schwächer gefärbten Proben 4-6 sowie Blind- und Vergleichsproben B ist eine Auswertung der Veränderungen während der Belichtung nach dem für die Proben 1-3 und Blind- und Vergleichsproben A oben beschriebenem Vorgehen nicht möglich, da die geringen Gehalte an Farbmitteln keinen ausreichenden Effekt im wellenlängenaufgelösten Transmissionsspektrum zeigen. Da es sich allerdings um dieselben Farbmittel handelt, ist hier ein vergleichbares Ergebnis zu erwarten da die Stabilität unter LED-Licht nicht abhängig ist von der Konzentration, sondern von der Natur der Farbmittel ist. Man erkennt bei der Betrachtung der optische Daten Yellowness Index YI und Transmission Ty (bestimmt nach dem oben beschriebenen Methoden) beziehungsweise ihrer Veränderung wären der Belichtungsversuche die gleichen Effekte.

Tabelle 9: optische Eigenschaften der Proben 4-6 und "B" vor/nach der Hochtemperaturlagerung

| **Temperaturlagerung** | **Vergleichsprobe B** | | **Probe 4** | | **Probe 5** | | **Probe 6** | | **Blindprobe B** | |
|---|---|---|---|---|---|---|---|---|---|---|
| **Optische Daten** | **0 h** | **750 h** | **0 h** | **750 h** | **0h** | **750 h** | **0 h** | **750 h** | **0 h** | **750 h** |
| **YI** | -0,51 | 1,01 | -0,16 | 0,57 | 0,07 | 0,34 | 0,09 | 0,39 | 1,22 | 1,19 |
| **Delta YI** | - | +1,52 | - | +0,73 | - | +0,27 | - | +0,30 | - | -0,03 |
| **Ty [%]** | 88,13 | 89,49 | 87,39 | 88,08 | 87,41 | 87,96 | 88,53 | 88,78 | 89,98 | 90,64 |
| **Delta Ty [%]** | - | +1,36 | - | +0,69 | - | +0,55 | - | +0,25 | - | +0,66 |

Tabelle 10: optische Eigenschaften der Proben 4-6 und "B" vor/nach der Belichtung in Anlage A

| **Anlage A** | **Vergleichsprobe B** | | **Probe 4** | | **Probe 5** | | **Probe 6** | | **Blindprobe B** | |
|---|---|---|---|---|---|---|---|---|---|---|
| **Optische Daten** | **0 h** | **750 h** | **0 h** | **750 h** | **0 h** | **750 h** | **0 h** | **750 h** | **0 h** | **750 h** |
| **YI** | -0,47 | 1,08 | -0,20 | 1,02 | 0,04 | 0,95 | 0,33 | 0,98 | 1,12 | 1,24 |
| **Delta YI** | - | +1,55 | - | +1,22 | - | +0,91 | - | +0,65 | - | +0,12 |
| **Ty [%]** | 88,13 | 90,08 | 87,31 | 88,54 | 87,40 | 87,59 | 88,49 | 88,08 | 90,24 | 89,85 |
| **Delta Ty [%]** | - | +1,95 | - | +1,23 | - | +0,19 | - | -0,41 | - | -0,39 |

Tabelle 11: optische Eigenschaften der Proben 4-6 und "B" vor/nach der Belichtung in Anlage B

| **Anlage B** | **Vergleichsprobe B** | | **Probe 4** | | **Probe 5** | | **Probe 6** | | **Blindprobe B** | |
|---|---|---|---|---|---|---|---|---|---|---|
| **Optische Daten** | **0 h** | **750 h** | **0 h** | **750 h** | **0 h** | **750 h** | **0 h** | **750 h** | **0 h** | **750 h** |
| **YI** | -0,42 | 0,63 | -0,17 | 0,43 | 0,25 | 0,52 | 0,40 | 0,57 | 1,13 | 1,18 |
| **Delta YI** | - | +1,05 | - | +0,60 | - | +0,27 | - | +0,17 | - | +0,05 |
| **Ty [%]** | 88,14 | 89,22 | 87,59 | 87,85 | 87,42 | 87,35 | 88,39 | 88,24 | 90,13 | 90,16 |
| **Delta Ty [%]** | - | +1,08 | - | +0,26 | - | -0,07 | - | -0,15 | - | +0,03 |

Tabelle 12: optische Eigenschaften der Proben 4-6 und "B" vor/nach der Belichtung in Anlage C

| **Anlage C** | **Vergleichsprobe B** | | **Probe 4** | | **Probe 5** | | **Probe 6** | | **Blindprobe B** | |
|---|---|---|---|---|---|---|---|---|---|---|
| **Optische Daten** | **0 h** | **750 h** | **0 h** | **750 h** | **0 h** | **750 h** | **0 h** | **750 h** | **0 h** | **750 h** |
| **YI** | -0,51 | 1,01 | -0,16 | 0,57 | 0,07 | 0,34 | 0,09 | 0,39 | 1,22 | 1,19 |
| **Delta YI** | - | +1,52 | - | +0,73 | - | +0,27 | - | +0,30 | - | -0,03 |
| **Ty [%]** | 88,13 | 89,49 | 87,39 | 88,08 | 87,41 | 87,96 | 88,53 | 88,78 | 89,98 | 90,64 |

(fortgesetzt)

| Anlage C | Vergleichsprobe B | | Probe 4 | | Probe 5 | | Probe 6 | | Blindprobe B | |
|---|---|---|---|---|---|---|---|---|---|---|
| **Optische Daten** | **0 h** | **750 h** | **0 h** | **750 h** | **0 h** | **750 h** | **0 h** | **750 h** | **0 h** | **750 h** |
| **Delta Ty [%]** | - | +1,36 | - | +0,69 | - | +0,55 | - | +0,25 | - | +0,66 |

Tabelle 13: optische Eigenschaften der Proben 4-6 und "B" vor/nach der Belichtung in Anlage D

| Anlage D | Vergleichsprobe B | | Probe 4 | | Probe 5 | | Probe 6 | | Blindprobe B | |
|---|---|---|---|---|---|---|---|---|---|---|
| **Optische Daten** | **0 h** | **750 h** | **0h** | **750 h** | **0 h** | **750 h** | **0 h** | **750 h** | **0 h** | **750 h** |
| **YI** | -0,37 | 0,06 | -0,13 | -0,31 | 0,02 | 0,28 | 0,38 | 0,41 | 1,21 | 1,23 |
| **Delta YI** | - | +0,43 | - | -0,18 | - | +0,26 | - | +0,03 | - | +0,02 |
| **Ty [%]** | 87,99 | 89,87 | 87,31 | 88,28 | 87,20 | 87,6 | 88,20 | 87,53 | 89,80 | 89,92 |
| **Delta Ty [%]** | - | +1,88 | - | +0,97 | - | +0,40 | - | -0,67 | - | +0,12 |

Tabelle 14: gemittelte Veränderung der optischen Kennwerte YI und Ty während der Belichtungen A-D

| Veränderung der optischen Daten | Vergleichsprobe B | Probe 4 | Probe 5 | Probe 6 |
|---|---|---|---|---|
| **Delta YI** | +1,14 | +0,69 | +0,43 | +0,29 |
| **Delta Ty [%]** | +1,57 | +0,79 | +0,27 | -0,25 |

Tabelle 14 zeigt deutlich, dass sich die optischen Daten der Vergleichsprobe B sehr viel stäker verändern als die der erfindungsgemäßen Beispielproben 4,5 und 6. Die Zunahme des Gelbwertes ist in der Hauptsache mit dem Abbau der blauen und violetten Farbmittel in Verbindung zu setzen. Die Werte der Blindprobe sind annähernd konstant (s. Tabellen 10-13), diese repräsentieren die Veränderung des Basisharzes während der Belichtungs- und Temperaturlagerungsversuche. Auch die Veränderung der Transmissionsdaten Ty zeigen deutlich die höhere Stabilität der optischen Eigenschaften für die erfindungsgemäßen Proben 4-6 relativ zu der mit den Vergleichsfarbmitteln eingefärbten Vergleichsprobe B.

## Patentansprüche

1. Verwendung von

0,001 ppm bis 10000,000 ppm mindestens eines Farbmittels der Struktur 1a und/oder 1b (Komponente c),

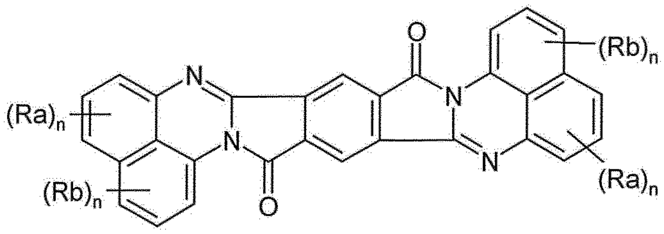

(1a)

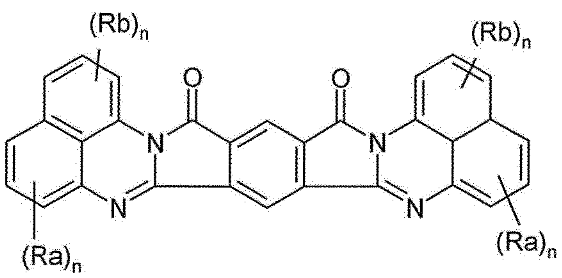

(1b)

wobei

- Ra und Rb unabhängig voneinander für einen linearen oder verzweigten Alkylrest oder Halogen steht;
- n steht unabhängig vom jeweiligen R für eine natürliche Zahl zwischen 0 und 3, wobei der Rest für n=0

Wasserstoff ist, und

0,001 ppm bis 10000,000 ppm mindestens eines Farbmittels aus der Gruppe, welche die von Struktur 1a und/oder 1b verschiedenen Farbmittel auf Perinonbasis, Indanthronbasis und Farbmittel auf Basis eines Phthalocyanins oder Phthalocyaninkomplexes umfasst (Komponente d),
in Polymerzusammensetzungen zur Herstellung von eingefärbten geformten Gegenständen mit hoher Farbstabilität gegenüber der Einwirkung von LED-Licht.

2. Verwendung gemäß Anspruch 1, wobei das Polymer der Polymerzusammensetzung Polycarbonat ist.

3. Verwendung gemäß Anspruch 1, **dadurch gekennzeichnet, dass** die Komponente d) ausgewählt ist aus der Gruppe, die die Strukturen 2a, 2b, 3a, 3b und 4 umfasst

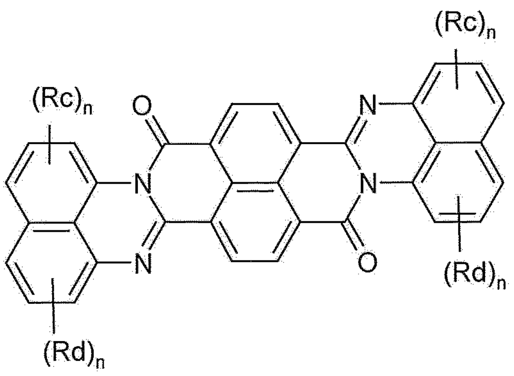

(2a)

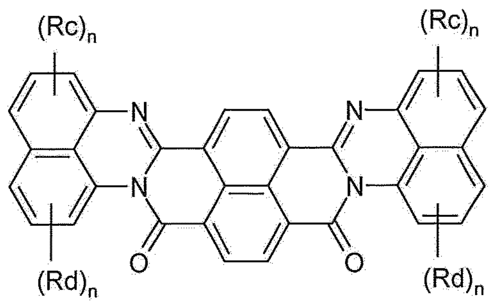

(2b)

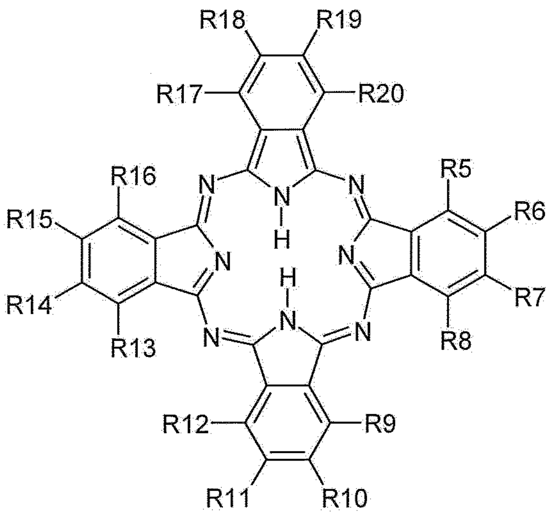

(3a)

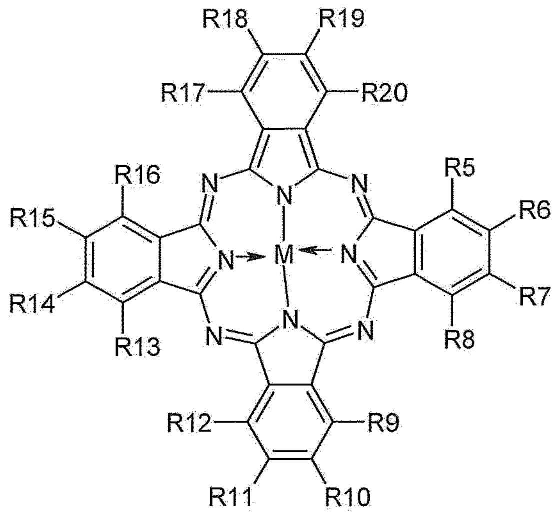

(3b)

wobei
für (2a) und (2b)

- Rc und Rd unabhängig voneinander für einen linearen oder verzweigten Alkylrest oder Halogen steht;
- n steht unabhängig vom jeweiligen R für eine natürliche Zahl zwischen 0 und 3, wobei der Rest für n=0 Wasserstoff ist;

sowie für (3 a) und (3b),
wobei

- die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind, und
- M ist ausgewählt aus der Gruppe, die Aluminium, Nickel, Cobalt, Eisen, Zink, Kupfer und Mangan umfasst;

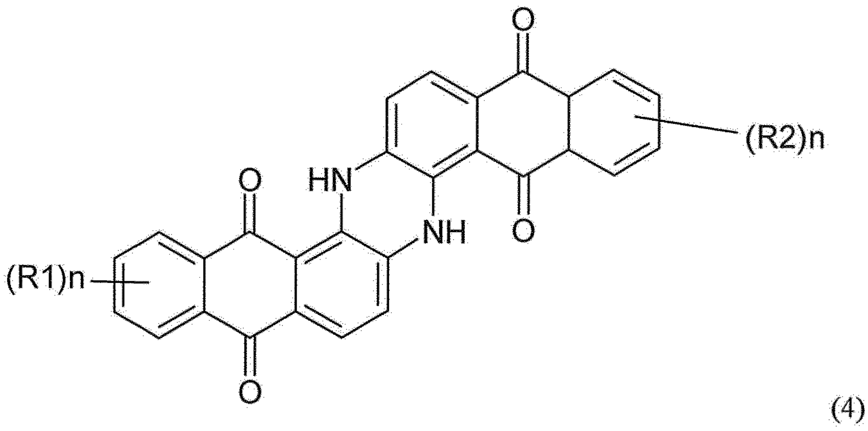

(4)

wobei

- R1 und R2 unabhängig voneinander für einen linearen oder verzweigten Alkylrest oder Halogen steht;
- n für eine natürliche Zahl zwischen 0 und 4 steht.

**4.** Verwendung gemäß Anspruch 1, **dadurch gekennzeichnet, dass** das Verhältnis von c) zu d) 1: 1 beträgt.

**5.** Verwendung gemäß Anspruch 1, **dadurch gekennzeichnet, dass** als Komponente c eine Isomeren-Mischung eingesetzt wird, wobei der Isomerenanteil in der Mischung 1:1 beträgt.

**6.** Verwendung gemäß Anspruch 1, **dadurch gekennzeichnet, dass** Komponente c eine Substanz ist entsprechend den Strukturen 1a und 1b mit in allen Ringen n=0, so dass alle Ra und Rb = H sind, und **dadurch gekennzeichnet, dass** die Strukturen 1a und 1b nebeneinander in einem Verhältnis von 1:1 vorliegen.

**7.** Verwendung gemäß Anspruch 1 oder 6, **dadurch gekennzeichnet, dass** Komponente d eine Substanz ist entsprechend den Strukturen 2a und 2b mit in allen Ringen n=0, so dass alle Ra und Rb = H sind und **dadurch gekennzeichnet, dass** die Strukturen 2a und 2b nebeneinander in einem Verhältnis von 1:1 vorliegen.

**8.** Verwendung gemäß Anspruch 1 oder 6, **dadurch gekennzeichnet, dass** Komponente d eine Substanz ist entsprechend der Struktur 3b mit R(alle)=H und M=Cu.

**9.** Verwendung gemäß Anspruch 1 oder 6, **dadurch gekennzeichnet, dass** Komponente d eine Substanz ist entsprechend der Struktur 4 mit allen R(5-20)=H.

**10.** Verwendung gemäß Anspruch 1, wobei die Polymerzusammensetzungen, bezogen auf die Gesamtzusammensetzung, enthält:

a) transparentes oder transluzentes Polymer oder Polymergemisch in einer Menge, dass diese mit den Komponenten b bis g 100 Gew.-% ergibt,
b) optional 0 ppm bis 2500 ppm ein oder mehrere Stabilisatoren,
c) 0,001 ppm bis 10000,000 ppm mindestens eines Farbmittels der Struktur 1a und/oder 1b,

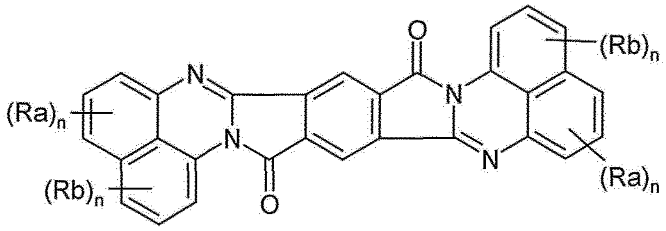 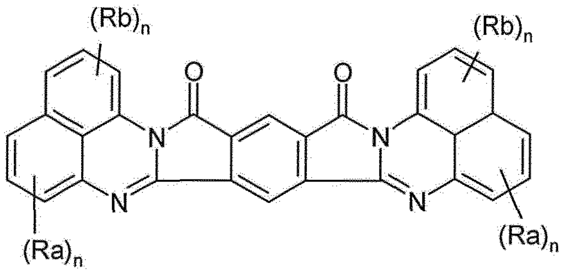

(1a) (1b)

wobei

- Ra und Rb unabhängig voneinander für einen linearen oder verzweigten Alkylrest oder Halogen steht;
- n steht unabhängig vom jeweiligen R für eine natürliche Zahl zwischen 0 und 3, wobei der Rest für n=0 Wasserstoff ist;

d) 0,001 ppm bis 10000,000 ppm mindestens eines Farbmittels aus der Gruppe, welche die von Struktur 1a und/oder 1b verschiedenen Farbmittel auf Perinonbasis, Indanthronbasis und Farbmittel auf Basis eines Phthalocyanins oder Phthalocyaninkomplexes umfasst,
e) optional 0 ppm bis 3000 ppm ein oder mehrere Entformer,
f) optional 0 ppm bis 6000 ppm ein oder mehrere UV-Absorber,
g) optional 0 ppm bis 500.000 ppm ein oder mehrere weitere Additive.

**11.** Verwendung gemäß Anspruch 10, **dadurch gekennzeichnet, dass** die Komponenten c und d jeweils in einem Anteil von 0,01 ppm bis 5,00 ppm neben den Komponenten a, b, e, f und g eingesetzt werden.

**12.** Verwendung gemäß Anspruch 10, **dadurch gekennzeichnet, dass** die Komponenten c und d jeweils in einem Anteil von 10,000 ppm bis 500,00 ppm neben den Komponenten a, b, e, f und g eingesetzt werden.

## Claims

**1.** Use of

0.001 ppm to 10,000.000 ppm of at least one dye of structure 1a and/or 1b (component c),

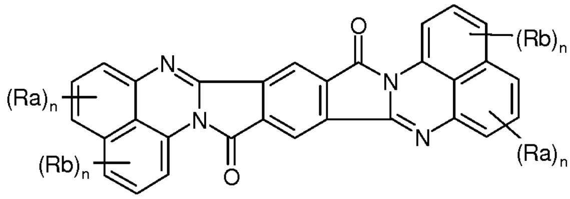 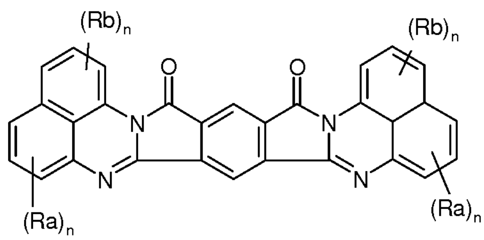

(1a) (1b)

in which

- Ra and Rb independently of each other denote a linear or branched alkyl radical, or halogen;
- n independently of each R denotes a natural number between 0 and 3, the radical being hydrogen in the case of n=0, and

0.001 ppm to 10,000.000 ppm of at least one dye from the group encompassing the dyes differing from structure 1a and/or 1b based on perinone or indanthrone and dyes based on a phthalocyanine or phthalocyanine complex (component d),
in polymer compositions to produce coloured moulded objects with high colour stability in respect of exposure

to LED light.

2. Use according to claim 1, wherein the polymer of the polymer composition is polycarbonate.

3. Use according to claim 1, **characterised in that** component d) is selected from the group encompassing structures 2a, 2b, 3a, 3b and 4

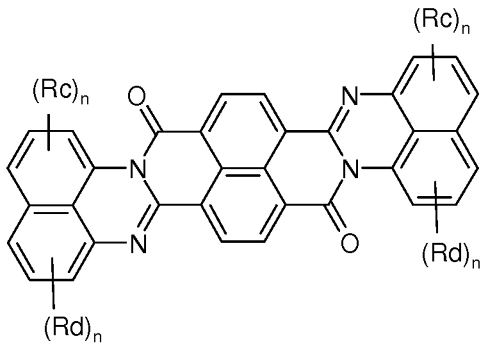

(2a)

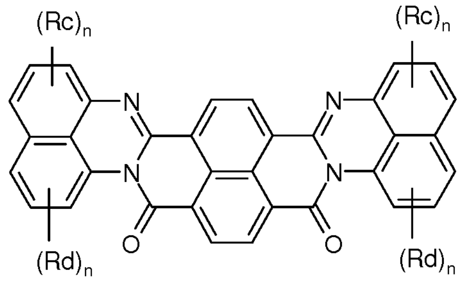

(2b)

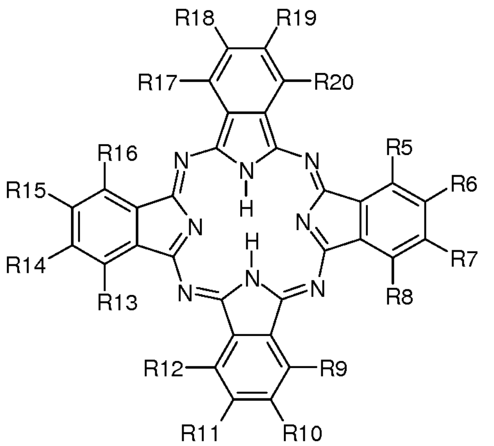

(3a)

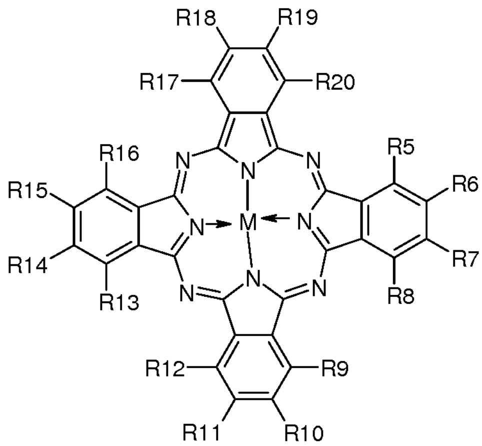

(3b)

in which for (2a) and (2b)

- Rc and Rd independently of each other denote a linear or branched alkyl radical, or halogen;
- n independently of each R denotes a natural number between 0 and 3, the radical being hydrogen in the case of n=0;

and for (3a) and (3b)
in which

- the radicals R(5-20) are in each case independently of one another hydrogen, methyl, ethyl, propyl, isopropyl, butyl, isobutyl, tert-butyl, pentyl, neopentyl, hexyl, thexyl, fluorine, chlorine, bromine, sulfone or CN, and
- M is selected from the group encompassing aluminium, nickel, cobalt, iron, zinc, copper and manganese;

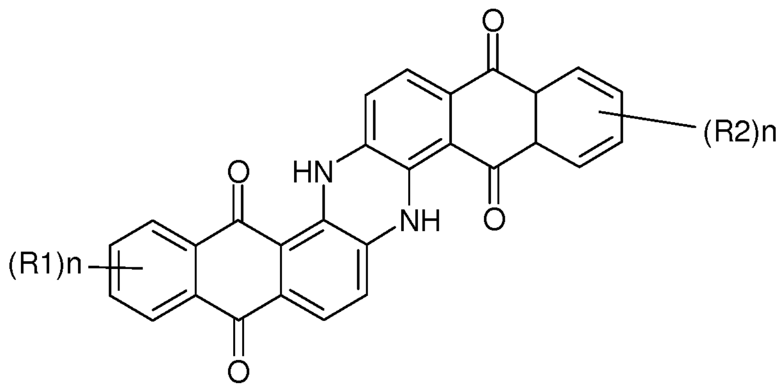

(4)

in which

- R1 and R2 independently of each other denote a linear or branched alkyl radical, or halogen;
- n denotes a natural number between 0 and 4.

**4.** Use according to claim 1, **characterised in that** the ratio of c) to d) is 1:1.

**5.** Use according to claim 1, **characterised in that** an isomer mixture is used as component c, the proportion of isomers in the mixture being 1:1.

**6.** Use according to claim 1, **characterised in that** component c is a substance corresponding to structures 1a and 1b with n=0 in all rings, such that all Ra and Rb = H and **characterised in that** structures 1a and 1b are present side by side in a ratio of 1:1.

**7.** Use according to claim 1 or 6, **characterised in that** component d is a substance corresponding to structures 2a and 2b with n=0 in all rings, such that all Ra and Rb = H, and **characterised in that** structures 2a and 2b are present side by side in a ratio of 1:1.

**8.** Use according to claim 1 or 6, **characterised in that** component d is a substance corresponding to structure 3b with R(all)=H and M=Cu.

**9.** Use according to claim 1 or 6, **characterised in that** component d is a substance corresponding to structure 4 with all R(5-20)=H.

**10.** Use according to claim 1, wherein the polymer compositions comprises, relative to the overall composition,

a) transparent or translucent polymer or polymer blend in an amount which together with components b to g gives 100 wt.%,
b) optionally 0 ppm to 2500 ppm of one or more stabilisers,
c) 0.001 ppm to 10,000.000 ppm of at least one dye of structure 1a and/or 1b,

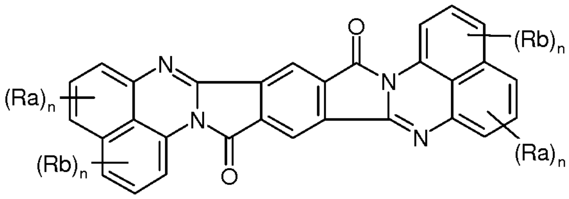

(1a)

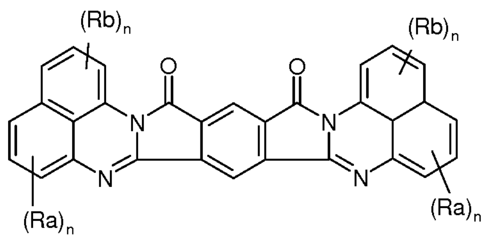

(1b)

in which

- Ra and Rb independently of each other denote a linear or branched alkyl radical, or halogen;

- n independently of each R denotes a natural number between 0 and 3, the radical being hydrogen in the case of n=0;

d) 0.001 ppm to 10,000.000 ppm of at least one dye from the group encompassing the dyes differing from structure 1a and/or 1b based on perinone or indanthrone and dyes based on a phthalocyanine or phthalocyanine complex,
e) optionally 0 ppm to 3000 ppm of one or more release agents,
f) optionally 0 ppm to 6000 ppm of one or more UV absorbers,
g) optionally 0 ppm to 500,000 ppm of one or more further additives.

**11.** Use according to claim 10, **characterised in that** components c and d are each used in a proportion of 0.01 ppm to 5.00 ppm in addition to components a, b, e, f and g.

**12.** Use according to claim 10, **characterised in that** components c and d are each used in a proportion of 10.000 ppm to 500.00 ppm in addition to components a, b, e, f and g.

**Revendications**

**1.** Utilisation de

0,001 ppm à 10 000,000 ppm d'au moins un colorant de structure la et/ou 1b (composant c),

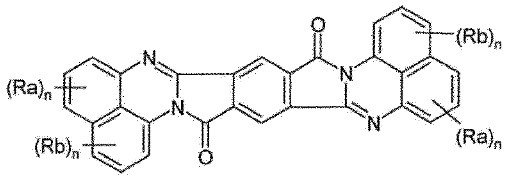
(1a)

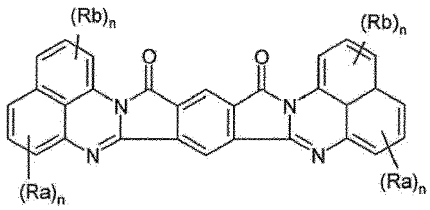
(1b)

dans lesquelles

- Ra et Rb représentent indépendamment l'un de l'autre un radical alkyle linéaire ou ramifié ou un halogène ;
- n représente indépendamment du R en question un nombre naturel compris entre 0 et 3, le radical pour n = 0 étant l'hydrogène, et

0,001 ppm à 10 000,000 ppm d'au moins un colorant du groupe qui comprend les colorants différents de la structure 1a et/ou 1b à base de périnone, à base d'indanthrone et les colorants à base d'une phtalocyanine ou d'un complexe de phtalocyanine (composant d),
dans des compositions polymères pour la fabrication d'articles façonnés colorés ayant une stabilité de la couleur élevée sous l'effet d'une lumière LED.

**2.** Utilisation selon la revendication 1, dans laquelle le polymère de la composition polymère est un polycarbonate.

**3.** Utilisation selon la revendication 1, dans laquelle le composant d) est choisi dans le groupe comprenant les structures 2a, 2b, 3a, 3b et 4

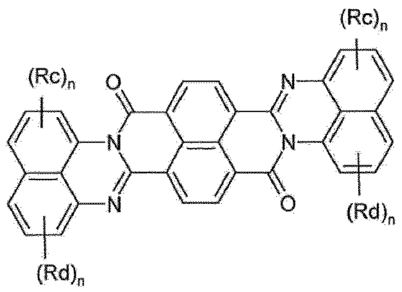
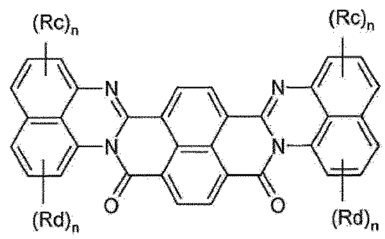

(2a) (2b)

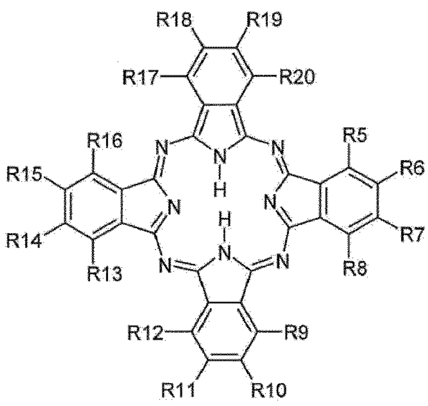
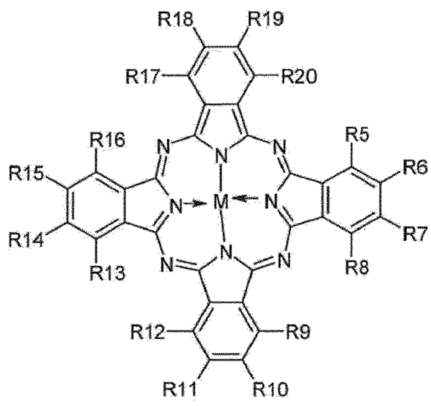

(3a) (3b)

dans lesquelles
pour (2a) et (2b),

- Rc et Rd représentent indépendamment l'un de l'autre un radical alkyle linéaire ou ramifié ou un halogène ;
- n représente indépendamment du R en question un nombre naturel compris entre 0 et 3, le radical pour n = 0 étant l'hydrogène ;

et pour (3a) et (3b),

- les radicaux R(5-20) représentent chacun indépendamment les uns des autres hydrogène, méthyle, éthyle, propyle, isopropyle, butyle, isobutyle, tert.-butyle, pentyle, néopentyle, hexyle, thexyle, fluor, chlore, brome, sulfone ou CN, et
- M est choisi dans le groupe qui comprend aluminium, nickel, cobalt, fer, zinc, cuivre et manganèse ;

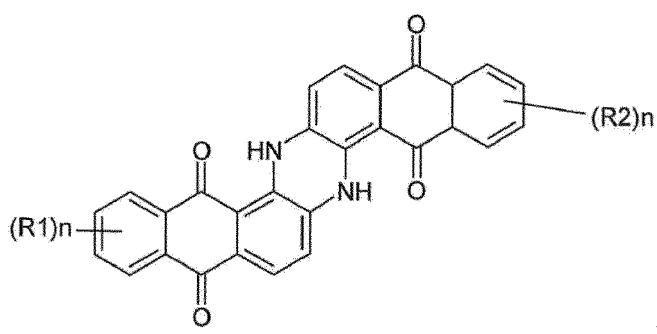

(4)

dans laquelle

- R1 et R2 représentent indépendamment l'un de l'autre un radical alkyle linéaire ou ramifié ou un halogène ;
- n représente un nombre naturel compris entre 0 et 4.

**4.** Utilisation selon la revendication 1, **caractérisée en ce que** le rapport entre c) et d) est de 1:1.

**5.** Utilisation selon la revendication 1, **caractérisée en ce qu'**un mélange d'isomères est utilisé en tant que composant c, la proportion des isomères dans le mélange étant de 1:1.

**6.** Utilisation selon la revendication 1, **caractérisée en ce que** le composant c est une substance correspondant aux structures la et 1b avec dans tous les cycles n = 0, de sorte que tous les Ra et Rb = H, et **caractérisée en ce que** les structures la et 1b sont présentes l'une par rapport à l'autre en un rapport de 1:1.

**7.** Utilisation selon la revendication 1 ou 6, **caractérisée en ce que** le composant d est une substance correspondant aux structures 2a et 2b avec dans tous les cycles n = 0, de sorte que tous les Ra et Rb = H, et **caractérisée en ce que** les structures 2a et 2b sont présentes l'une par rapport à l'autre en un rapport de 1:1.

**8.** Utilisation selon la revendication 1 ou 6, **caractérisée en ce que** le composant d est une substance correspondant à la structure 3b avec R(tous) = H et M = Cu.

**9.** Utilisation selon la revendication 1 ou 6, **caractérisée en ce que** le composant d est une substance correspondant à la structure 4 avec tous les R(5-20) = H.

**10.** Utilisation selon la revendication 1, dans laquelle les compositions polymères contiennent, par rapport à la composition totale :

a) un polymère ou mélange de polymères transparent ou translucide en une quantité telle que la somme de celle-ci avec les composants b à g soit de 100 % en poids,
b) éventuellement 0 ppm à 2 500 ppm d'un ou de plusieurs stabilisateurs,
c) 0,001 ppm à 10 000,000 ppm d'au moins un colorant de la structure 1a et/ou 1b,

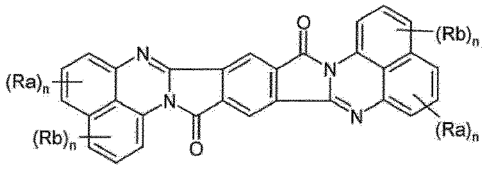

(1a)

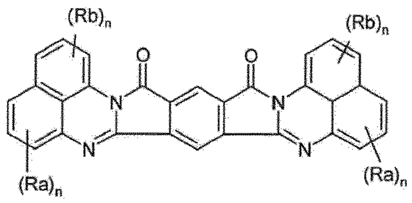

(1b)

dans lesquelles

- Ra et Rb représentent indépendamment l'un de l'autre un radical alkyle linéaire ou ramifié ou un halogène ;
- n représente indépendamment du R en question un nombre naturel compris entre 0 et 3, le radical pour n = 0 étant l'hydrogène ;

d) 0,001 ppm à 10 000,000 ppm d'au moins un colorant du groupe qui comprend les colorants différents de la structure la et/ou 1b à base de périnone, à base d'indanthrone et les colorants à base d'une phtalocyanine ou d'un complexe de phtalocyanine,
e) éventuellement 0 ppm à 3 000 ppm d'un ou de plusieurs agents démoulants,
f) éventuellement 0 ppm à 6 000 ppm d'un ou de plusieurs absorbeurs UV,
g) éventuellement 0 ppm à 500 000 ppm d'un ou de plusieurs autres additifs.

**11.** Utilisation selon la revendication 10, **caractérisée en ce que** les composants c et d sont chacun utilisés en une proportion de 0,01 ppm à 5,00 ppm en plus des composants a, b, e, f et g.

**12.** Utilisation selon la revendication 10, **caractérisée en ce que** les composants c et d sont chacun utilisés en une proportion de 10,000 ppm à 500,00 ppm en plus des composants a, b, e, f et g.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6476158 B
- US 6355723 B
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- DE 2148101
- WO 2009074504 A
- EP 0839623 A
- WO 9615102 A
- EP 0500496 A

### In der Beschreibung aufgeführte Nicht-Patentliteratur

- Chemistry and Physics of Polycarbonates. **SCHNELL.** Polymer Reviews. Interscience Publishers, 1964, vol. 9
- Encyclopedia of Polymer Science and Engineering. **D. FREITAG ; U. GRIGO ; P.R. MÜLLER ; H. NOUVERTNE ; BAYER AG.** Polycarbonates. 1988, vol. 11, 648-718
- Polycarbonate, Polyacetale, Polyester, Celluloseester. **DRES. U. GRIGO ; K. KIRCHNER ; P.R. MÜLLER.** Polycarbonate. Carl Hanser Verlag, 1992, vol. 3/1, 117-299
- **H. SCHNELL.** Chemistry and Physics of Polycarbonates. Interscience Publishers, 1964
- **HANS ZWEIFEL.** Plastics Additives Handbook. Hanser Verlag, 2000